# EUROPEAN PATENT SPECIFICATION

(11) **EP 2 135 651 B1**
(45) Date of publication and mention of the grant of the patent: **13.04.2011**
(21) Application number: 09162621.8
(22) Date of filing: 12.06.2009
(51) Int. Cl.: A63F 13/02

(54) **Game controller case, game controller case set, and sound output control system**
Spielsteuerungsgehäuse, Spielsteuerungsgehäusesatz und Soundausgabesteuerungssystem
Boîtier de contrôleur de jeux, ensemble de boîtiers de contrôleur de jeux et système de commande de la sortie du son

(30) Priority: 20.06.2008 JP 2008162573
(43) Date of publication of application: 23.12.2009
(73) Proprietor: Namco Bandai Games Inc., Shinagawa-ku Tokyo 140-8590 (JP)
(72) Inventor: Nakajima, Nobutaka, Tokyo 140-8590 (JP)
(74) Representative: Emerson, Peter James

(56) References cited:
- EP-A- 1 757 343
- CN-Y- 201 015 711
- CN-Y- 201 052 406
- ACTIVISION: "Guitar Hero 3 : Legends of Rock" 20071028, [Online] 28 October 2007 (2007-10-28), pages 3-4, XP002515315 Retrieved from the Internet: URL:http://www.gamefaqs.com/console/wii/da ta/938224.html> [retrieved on 2009-01-19]

## Description

### BACKGROUND

The present invention relates to a game controller case that holds a general-purpose game controller, and the like.

A music game has been known as one type of game. The music game allows the player to enjoy virtual dancing or playing of a musical instrument by performing an operation input (e.g., beating a dedicated controller that imitates a musical instrument or performing dance steps) in rhythm and tempo.

The music game is normally played in a video arcade or the like, and the player normally plays the music game using a dedicated game machine developed for business use. In recent years, a music game that allows the player to enjoy virtual playing of a Japanese drum or the like using a dedicated controller connected to a consumer game device has been developed, and allows family play (see JP-A-2004-313764, for example). In this case, the consumer game device serves as a sound output control device, and outputs the sound of a Japanese drum.

A dedicated electronic musical instrument that detects a change in angular velocity direction of a drumstick or a keyboard using an acceleration sensor, and utilizes the detected change as an operation input has also been known (see JP-A-6-75571, for example). In this case, the electronic musical instrument serves as a sound output control device.

However, many players desire to enjoy a music game using a general-purpose game controller attached to a consumer game device without using a dedicated game controller. This particularly applies to a music game that enables the player to easily enjoy virtual playing of a percussion instrument irrespective of age and sex.

When using a dedicated game controller, the game manufacturer must make an investment to develop and produce hardware that can withstand a beating operation. On the other hand, the player does not desire to purchase an expensive dedicated game controller that can be used only for the particular music game.

Various cases for game controllers, designed or suitable for music games are known from CN-201052406, EP-A1-1757343 and "Guitar Hero 3: Legends of Rock", Activision. However these cases are not designed to withstand a beating operation.

### SUMMARY

According to one aspect of the invention, there is provided a game controller case comprising: a holding section that removably holds a game controller that includes an acceleration detection section and a communication section that transmits an acceleration detected by the acceleration detection section to a game device; a contact section comprising an elastic layer for directly colliding against a beating target; and a transfer section that is disposed inside the contact section under the elastic layer, and is formed from a hard material, the transfer section transferring an impact that has occurred when a player has performed a beating operation on an article with the contact section to the holding section.

According to another aspect of the invention, there is provided a sound output control system comprising: a game device; a game controller that includes an acceleration detection section and transmits an acceleration detected by the acceleration detection section to the game device; a speaker that outputs sound based on a sound output signal input from the game device; and the above game controller case that holds the game controller, the game device including: a reception section that receives the acceleration detected by the game controller using the acceleration detection section; a position determination section that determines a position of the game controller when a player has performed a beating operation using the acceleration received by the reception section; and a sound output control section that changes the sound output from the speaker corresponding to the position determined by the position determination section.

### BRIEF DESCRIPTION OF THE DRAWINGS

FIG. 1 is a view showing a configuration example of a sound output control system.
FIGS. 2A to 2C are external views showing a configuration example of a game controller.
FIG. 3A is a front view showing a game controller, and FIG. 3B is a rear view showing a game controller.
FIG. 4 is a vertical cross-sectional view showing a configuration example of a game controller case.
FIG. 5A is a front view showing a state in which a game controller is placed in a game controller case, and FIG. 5B is a rear view showing a state in which a game controller is placed in a game controller case.
FIG. 6 is a vertical cross-sectional view showing a state in which a game controller is placed in a game controller case.
FIG. 7 is a view showing a game play style example.
FIG. 8 is a view showing a game screen example in a standby state.
FIG. 9 is a view showing a game screen example after a game has started.
FIG. 10 is a view illustrative of the concept of start operation determination.
FIG. 11 is a view illustrative of the concept of operation input determination.
FIG. 12 is a view illustrative of the concept of operation input determination.
FIG. 13 is a view illustrative of the concept of operation input determination.
FIG. 14 is a view illustrative of the concept of operation input determination.
FIG. 15 is a view illustrative of the concept of operation input determination.
FIG. 16 is a view illustrative of the concept of operation input determination.
FIG. 17 is a view illustrative of the concept of operation input determination.
FIG. 18 is a functional block diagram showing a functional configuration example according to a first embodiment.
FIG. 19 is a view showing a data configuration example of music data according to the first embodiment.
FIG. 20 is a view showing a data configuration example of position determination reference data according to the first embodiment.
FIG. 21 is a view showing a data configuration example of sound setting data according to the first embodiment.
FIG. 22 is a flowchart illustrative of the flow of a process according to the first embodiment.
FIGS. 23A to 23C are external views showing a configuration example of a game controller case according the first embodiment.
FIG. 24 is a vertical cross-sectional view showing a game controller case according a second embodiment.
FIG. 25A is an external view showing a configuration example of a performance guide section, and FIG. 25B is a view illustrative of the configuration of a light-emitting section 1130.
FIG. 26 is a schematic view illustrative of the state during a hitting operation according to the second embodiment, and the principle of determining the position of a game controller using an image taken by an imaging element.
FIG. 27 is a schematic view illustrative of the state during a hitting operation according to the second embodiment, and the principle of determining the position of a game controller using an image taken by an imaging element.
FIG. 28 is a schematic view illustrative of the state during a hitting operation according to the second embodiment, and the principle of determining the position of a game controller using an image taken by an imaging element.
FIG. 29 is a functional block diagram showing a functional configuration example according to the second embodiment.
FIG. 30 is a view showing a data configuration example of music data according to the second embodiment.
FIG. 31 is a flowchart illustrative of the flow of a process according to the second embodiment.
FIG. 32 is a flowchart illustrative of the flow of a process according to the second embodiment.
FIG. 33A is a front view showing a game controller case according to a modification, and FIG. 33B is a right side view showing a game controller case according to a modification.
FIG. 34 is a view showing a state in which a pointer function is used by utilizing a game controller according to a modification.
FIG. 35 is a view showing a modification of the configuration of a game screen.

### DESCRIPTION OF EXEMPLARY EMBODIMENTS

Several embodiments of the invention may enable the player to enjoy virtual playing of a percussion instrument using a general-purpose game controller.

The invention is defined in claims 1-13.

According to one embodiment of the invention, there is provided a game controller case comprising a holding section and a contact section that are formed integrally, the holding section removably holding a game controller that includes an acceleration detection section and a communication section that transmits an acceleration detected by the acceleration detection section to a sound output control device,
the game controller case being configured so that an impact that has occurred when a player has performed a beating operation on an article with the contact section is transferred to the game controller.

In order to enable the player to enjoy virtual playing of a percussion instrument using a general-purpose game controller without using a dedicated game controller, the player must use the game controller as if to operate a stick used to play a percussion instrument. However, the game controller may break due to impact if the player performs an operation (beating operation) by beating something with the game controller.

According to this embodiment, since the player performs an operation (beating operation) while holding the holding section so as to cover the game controller placed in the holding section, the impact due to the beating operation can be received by the contact section. The impact received by the contact section can be transferred to the holding section, transferred to the game controller from the holding section, and detected by the acceleration detection section. Therefore, a change in acceleration due to the beating operation can be detected while preventing a situation in which the impact is directly applied to the game controller so that the game controller breaks. This enables the player to enjoy playing a virtual percussion instrument using a general-purpose game controller.

In the game controller case,
the contact section may include a rod-shaped section, and a head that is provided on an end of the rod-shaped section, at least an outer layer of the head being formed of a shock-absorbing member.

According to the above configuration, the impact when the contact section comes in contact with an article can be moderately reduced. Therefore, noise due to the beating operation can be reduced while preventing damage to the contact section. It is particularly important to reduce noise due to the beating operation from the viewpoint of preventing noise that bothers the neighbors, for example.

In the game controller case,
the entire game controller case may be formed in a shape of a stick that is used to play a percussion instrument.

Examples of the stick used to play a percussion instrument include a drumstick of a drum set, a timpani mallet, a drumstick of a Japanese drum, and the like.

The performance can be made more interesting by forming the game controller case to imitate a stick used to play a percussion instrument.

In the game controller case,
the holding section may have an operation window that exposes an operation button provided in the game controller when the holding section holds the game controller.

According to the above configuration, the player can operate the operation button even if the game controller is placed in the game controller case. This makes it unnecessary to remove the game controller from the game controller case each time an operation input using the operation button is required, so that convenience to the user is improved. Moreover, various operation inputs can be implemented by utilizing the operational state of the operation button during a performance.

The game controller case may further comprise:
a finger insertion section, some or all of fingers of the player other than a thumb being inserted into the finger insertion section when the player holds the holding section.

According to the above configuration, a situation in which the player drops the game controller case when swinging the game controller case during the beating operation can be prevented.

According to another embodiment of the invention, there is provided a game controller case set comprising a pair of the above game controller cases.

According to the above embodiment, the user can enjoy the beating operation with each hand by operating a pair of game controller cases with the right hand and the left hand.

According to another embodiment of the invention, there is provided a sound output control system comprising:
a sound output control device;
a game controller that includes an acceleration detection section and transmits an acceleration detected by the acceleration detection section to the sound output control device;
a speaker that outputs sound based on a sound output signal input from the sound output control device; and
the above game controller case that holds the game controller,
the sound output control device including:
a reception section that receives the acceleration detected by the game controller using the acceleration detection section;
a position determination section that determines a position of the game controller when a player has performed a beating operation using the acceleration received by the reception section; and
a sound output control section that changes the sound output from the speaker corresponding to the position determined by the position determination section.

According to the above configuration, the acceleration due to the beating operation is acquired from the game controller placed in the game controller case to determine the position of the game controller during the beating operation. The sound can be output while changing the sound corresponding to the determined position. Specifically, the player can enjoy playing a percussion instrument using a general-purpose game controller. Moreover, since the output sound can be variously controlled by changing the position of the game controller case, a wide variety of sound can be output. For example, different types of sound can be output when the player performs the beating operating while holding the game controller horizontally (e.g., beating a desk), and when the player performs the beating operating while holding the game controller vertically (e.g., beating a wall).

In the sound output control system,
the game controller may include an imaging section;
the reception section may receive an image taken by the imaging section of the game controller; and
the position determination section may determine the position of the game controller during the beating operation using the image received by the reception section.

According to the above configuration, the position can be determined by utilizing the image taken by the imaging section. Therefore, the position determination accuracy can be further improved. For example, it is effective to determine the position by utilizing the image taken by the imaging section when the position could not be determined from the acceleration information since the the player has performed the beating operation weakly or noise is contained in the acceleration information.

The sound output control system may comprise:
a pair of the game controllers respectively placed in the game controller cases;
the reception section may receive the acceleration from each of the pair of game controllers;
the position determination section may determine the position of each of the pair of game controllers during the beating operation; and
the sound output control section may change the sound corresponding to the position of each of the pair of game controllers during the beating operation.

According to the above configuration, the output sound can be individually controlled corresponding to the position during the beating operation by separately processing the operation inputs using the two game controller cases. Therefore, various virtual performances effectively utilizing the right and left sticks can be implemented. This is effective for implementing a virtual performance in which the player plays various percussion instruments by effectively utilizing the right and left drumsticks (e.g., drum set), for example.

In the sound output control system,
the sound output control section may change the sound based on a combination of the positions of the pair of game controllers during the beating operation.

According to the above configuration, the output sound can be changed corresponding to the combination of the positions during the beating operation while separately processing the operation inputs using the two game controller cases. Therefore, a wider variety of virtual performances can be implemented.

The sound output control system may further comprise:
a detection section that detects whether or not the player has performed an operation that causes the pair of game controllers to collide based on the acceleration of each of the pair of game controllers and a reception timing of acceleration information,
the sound output control section may cause the speaker to output a given stick hitting sound corresponding to the detection by the detection section.

According to the above configuration, the operation input that beats the game controller cases together can be detected, and sound can be output corresponding to the operation input. For example, a drummer may start a performance after getting into the rhythm by beating the drumsticks together. Such a situation can be implemented by a virtual performance.

In the sound output control system,
the game controller may include a sound output section; and
the sound output control device may further include a hitting sound output control section that causes the sound output section of each of the pair of game controllers to output the stick hitting sound.

According to the above configuration, sound due to the collision operation can be reproduced and output from the game controller case. A more realistic virtual performance can be implemented as compared with the case of reproducing and outputting sound using a speaker provided in a video monitor (including a television to which a signal can be input externally). This is particularly effective when beating drumsticks together.

In the sound output control system,
the sound output control device may further include an operation interval determination section that determines a beating operation interval using a reception timing of the acceleration; and
the sound output control section may adjust an output interval of a given intermittent sound based on the interval determined by the operation interval determination section.

According to the above configuration, sound can be output while adjusting the sound output interval corresponding to the beating operation interval. For example, sound can be output as if high-speed successive beating operations were performed by reducing the sound output interval as compared with the actual beating operation interval.

Examples of embodiments to which the invention is applied are described below.

### First embodiment

A first embodiment to which the invention is applied is described below taking an example in which a general-purpose game controller is placed in a game controller case to form a virtual percussion instrument, and the player enjoys music by performing an operation input as if to play the virtual percussion instrument.

### System configuration

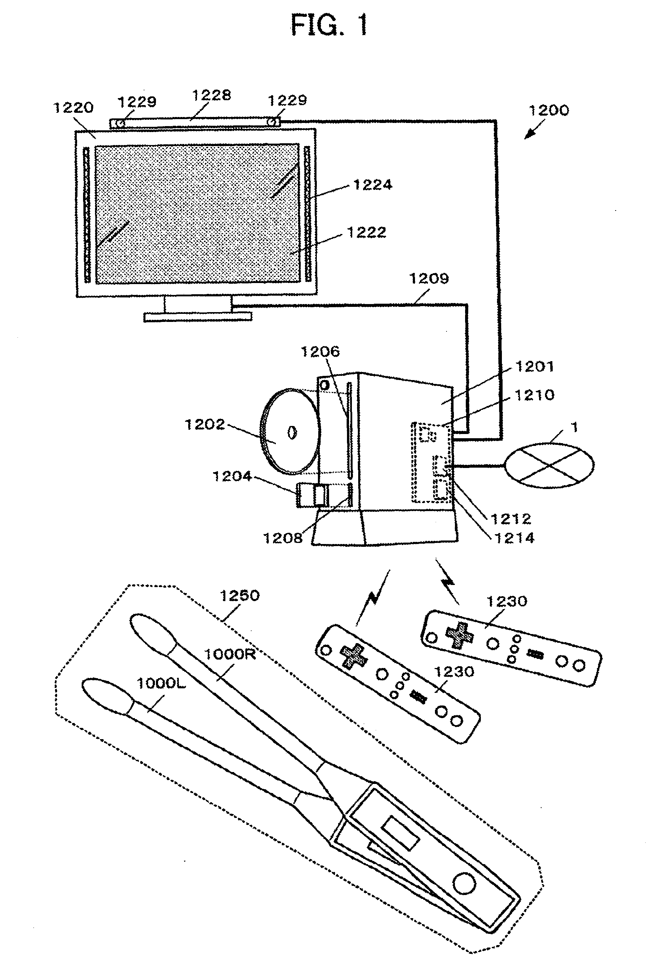

FIG. 1 is a view illustrative of a configuration example of a sound output control system according to this embodiment. As shown in FIG. 1, a sound output control system 1200 utilizes a game device main body 1201 that is a sound output control device, a video monitor 1220, a game controller 1230, and a game controller case set 1250. The game controller case set 1250 includes two game controller cases 1000 (1000R and 1000L) of the same type.

The game device main body 1201 (sound output control device) includes a control unit 1210 provided with a CPU, an image processing LSI, an IC memory, and the like, and readers 1206 and 1208 for reading data from information storage media such as an optical disk 1202 and a memory card 1204. The sound output control system 1200 executes a given video game by reading a game program and various types of setting data from the optical disk 1202 and the memory card 1204, and causing the control unit 1210 to perform various game calculations based on an operation input performed using the game controller 1230.

The control unit 1210 includes electric/electronic instruments such as various microprocessors (e.g., central processing unit (CPU), graphics processing unit (GPU), and digital signal processor (DSP)), an application-specific integrated circuit (ASIC), and an IC memory, and controls each section of the sound output control system 1200.

The control unit 1210 includes a communication device 1212 that connects to a communication channel 1 (e.g., Internet, local area network (LAN), or wide area network (WAN)), and implements data communication with an external device. The control unit 1210 includes a short-distance wireless communication module 1214 that exchanges data with a plurality of game controllers 1230 via short-distance wireless communication. As the short-distance wireless communication method, Bluetooth (registered trademark), ultra-wideband (UWB) wireless communication, a wireless LAN, and the like may be appropriately applied.

The control unit 1210 generates a game image and game sound based on operation input signals received from the game controller 1230 to execute the video game. An image signal and a sound signal based on the game image and the game sound generated by the control unit 1210 are output to the video monitor 1220 (display monitor; including a television to which a sound signal and a video signal can be input externally) connected to the game device main body 1201 via a cable 1209. The video monitor 1220 includes an image display device 1222 that displays an image, and a speaker 1224 that outputs sound. The player plays the game while watching a game image displayed on the image display device 1222 and listening to game sound output from the speaker 1224.

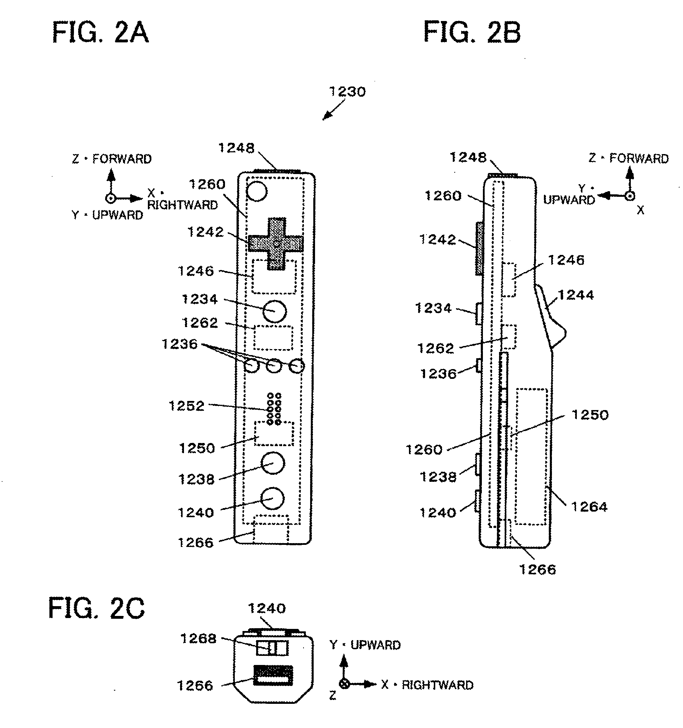

FIGS. 2A and 2B are external views showing an example of the game controller 1230 used in this embodiment. FIG. 2A is a front view (=top view), FIG. 2B is a right side view, and FIG. 2C is a bottom view. As shown in FIGS. 2A to 2C, the game controller 1230 is formed in the shape of a stick having a chamfered and approximately rectangular cross section. The player holds the game controller 1230 with one hand as if to hold a stick.

The game controller 1230 is configured so that a built-in controller control unit 1260, an input device, and an output device are connected via a local bus circuit implemented by an inter-integrated circuit (IIC) bus or the like. The controller control unit 1260 controls input and output between each device.

As a switch input device, the game controller 1230 includes an A button 1234 and first to third sub-buttons 1236 provided at the center of the front side (top side), and a first button 1238 and a second button 1240 provided at the rear of the front side, for example. The game controller 1230 includes an operation button such as an arrow key 1242 that is provided on the top side of the front side and allows the player to individually input the upward, downward, rightward, or leftward direction by pressing one of the four ends of the arrow key 1242. The game controller 1230 includes a trigger 1244 provided at the center of the back side.

As other input devices, the game controller 1230 includes an acceleration sensor 1246 that detects the movement and the inclination of the game controller 1230, and an imaging element 1248.

The acceleration sensor 1246 detects the accelerations in three perpendicular axial directions (i.e., the direction toward the end of the game controller 1230 in the longitudinal direction (upward direction in FIG. 2A) is a positive Z-axis direction, the rightward direction (rightward direction in FIG. 2A) is a positive X-axis direction, and the forward direction (leftward direction in FIG. 2B) is a positive Y-axis direction), and outputs an operation input signal including information corresponding to the detected acceleration to the controller control unit 1260.

The imaging element 1248 is implemented by a CCD sensor or a CMOS sensor. The imaging element 1248 is provided on the end of the game controller 1230. The imaging element 1248 images the state in front of the game controller 1230 in the longitudinal direction, and outputs an image signal to the controller control unit 1260. For example, the game controller 1230 may be utilized as a pointing device that indicates an arbitrary position within the game image by disposing a light-emitting section 1228 that includes a plurality of point light sources 1229 at a given position near the video monitor 1220, and imaging the light-emitting section 1228 to determine the direction of the end of the game controller 1230 based on the position of each point light source included in the image.

The game controller 1230 according to this embodiment includes a vibrator 1250 and a speaker 1252 as the output devices.

The vibrator 1250 produces vibrations based on a vibration control signal output from the controller control unit 1260 so that the player who holds the game controller 1230 feels the vibrations.

The speaker 1252 generates sound based on a sound output signal output from the controller control unit 1260, and outputs the generated sound from the front side.

The controller control unit 1260 includes electronic components such as a microchip (e.g., CPU and a bus controller IC that controls data communication through the local bus circuit) and an IC memory, a short-distance wireless communication module 1262 that implements wireless communication with the short-distance wireless communication module 1214 of the game device main body 1201, and the like.

The controller control unit 1260 generates an operation input signal based on signals transmitted from the input devices through the local bus circuit, and transmits the generated operation input signal to the game device main body 1201 through the short-distance wireless communication module 1262. When the controller control unit 1260 has received an output signal transmitted from the game device main body 1201 through the short-distance wireless communication module 1262, the controller control unit 1260 generates a control signal and transmits the control signal to the output device corresponding to the received output signal. Power necessary for the controller control unit 1260 and each section is supplied from a battery 1264 provided in a battery chamber formed in the rear side of the game controller 1230.

The game controller 1230 according to this embodiment includes an expansion terminal 1266 to which a communication cable that connects an operation input device and the output device is removably connected, and a strap holder 1268 that holds one end of a strap, the expansion terminal 1266 and the strap holder 1268 being provided on the rear end of the game controller 1230.

The expansion terminal 1266 is a terminal for connecting the local bus circuit provided in the controller control unit 1260 to the outside. A local bus according to this embodiment is implemented in accordance with the inter-integrated circuit (IIC) bus standard, for example. A connector having a given shape can be connected to the local bus via a hot plug, and insertion or removal (connection) of a connector or a device can be detected by detecting the voltage of a connection pin included in the expansion terminal 1266.

The total length of the game controller 1230 refers to the length of the game controller 1230 in the longitudinal direction in FIG. 2A. The total width of the game controller 1230 refers to the width of the game controller 1230 in FIG. 2A. The total height of the game controller 1230 refers to the width of the game controller 1230 in FIG. 2B.

### Configuration of game controller case

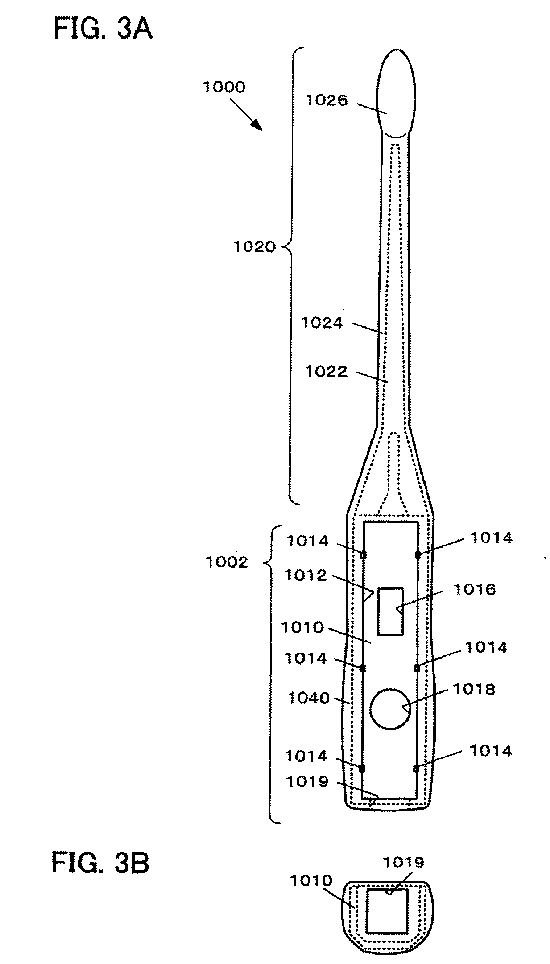

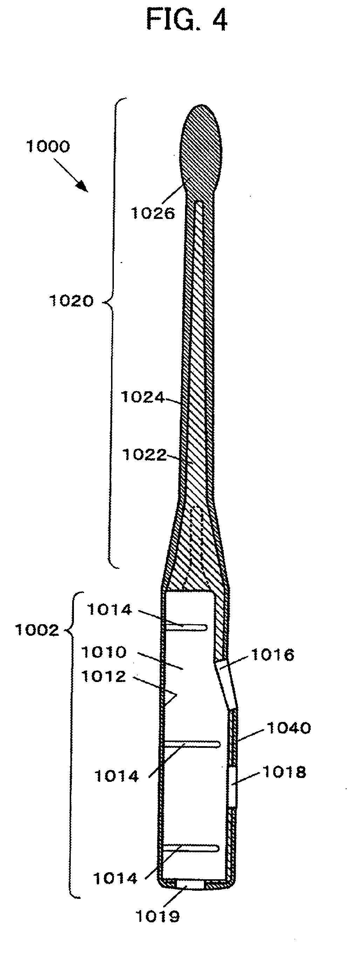

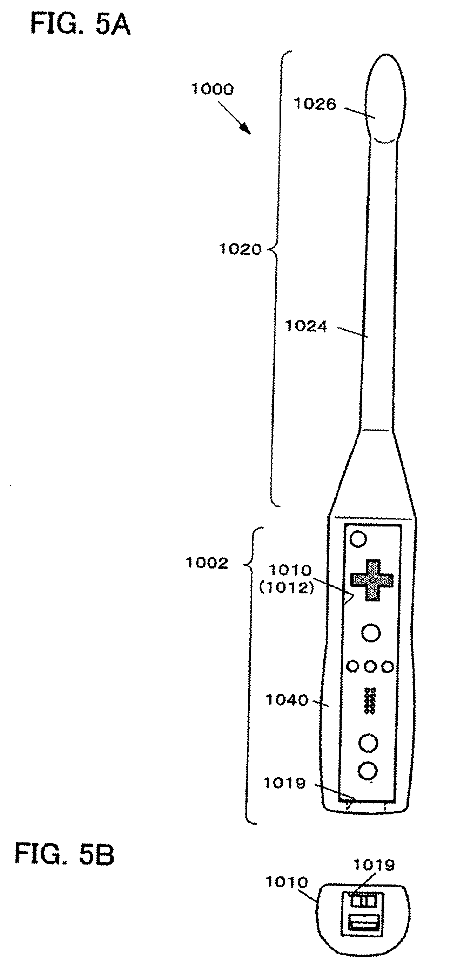

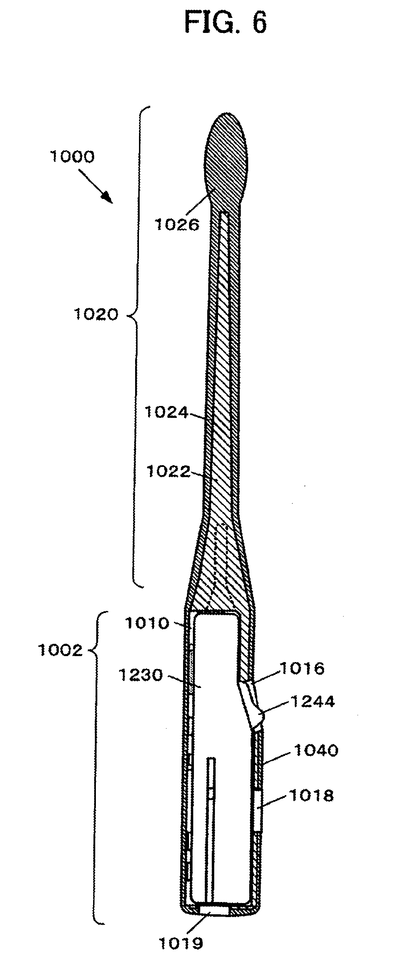

FIGS. 3A and 3B are external views showing a configuration example of the game controller case 1000 according to this embodiment. FIG. 3A is a front view (=top view), and FIG. 3B is a rear view. FIG. 4 is a vertical cross-sectional view showing the game controller case 1000. FIGS. 5A and 5B are external views showing a state in which the game controller 1230 is placed in the game controller case 1000. FIG. 6 is a vertical cross-sectional view showing the game controller case 1000 that holds the game controller 1230.

In the following description regarding the game controller case 1000, the upward direction in FIG. 3A is referred to as a forward (front end) direction, the forward direction in FIG. 3A is referred to as a front side (upward) direction, and the transverse direction in FIG. 3A is referred to as a transverse (right/left) direction.

As shown in FIGS. 3A, 3B, and 4, the game controller case 1000 is integrally formed to imitate a drumstick. The game controller case 1000 includes a grip section 1002 that is provided on the rear side of the game controller case 1000 and includes a holding section 1010 that holds the game controller 1230, and a contact section 1020 that is provided on the front side of the game controller case 1000 and comes in contact with a beating target during a beating (hitting) operation.

The holding section 1010 is formed by molding a hard resin such as an ABS resin to form a bathtub-shaped holding space. The game controller 1230 is fitted into (placed in) the holding section 1010 in a state in which the front end of the game controller 1230 faces in the same direction as the front end of the game controller case 1000 and the front side (i.e., the side on which the arrow key 1242 is formed) of the game controller 1230 faces upward (see FIGS. 5A, 5B, and 6).

A front opening 1012 that serves as an opening for placing the game controller 1230 and an operation window for externally operating the front side of the game controller 1230 placed in the game controller case 1000 is formed in the front side of the holding section 1010. Elastic stoppers 1014 protrude from the inner surface of the holding section 1010 at appropriate positions. The elastic stoppers 1014 undergo elastic deformation and adhere to the game controller 1230 placed in the holding section 1010 so that the game controller 1230 is not easily removed from the holding section 1010.

The back side (bottom surface) of the holding section 1010 is provided with a trigger operation window 1016 for externally operating the trigger 1244 of the game controller 1230 placed in the holding section 1010, a finger window 1018 for removing the game controller 1230 from the holding section 1010 by pushing the back side of the game controller 1230 placed in the holding section 1010 with the finger, and a connection terminal window 1019 for utilizing the connection terminal 1266 and the strap holder 1268 of the game controller 1230 placed in the holding section 1010.

An elastic layer 1040 is formed of a silicone resin, a synthetic rubber, or the like on the outer circumferential surface of the holding section 1010 to form the grip section 1002 that can be easily held by the player without slippage. In this embodiment, the player holds the game controller case 1000 while placing the thumb on the front side of the game controller 1230, placing the index finger on the trigger 1244, and holding the grip section 1002 with the middle finger, the third finger, and the little finger. Note that a normal way of holding the game controller case 1000 may be indicated while further preventing slippage by forming elevations or depressions for the middle finger, the third finger, and the little finger in the elastic layer 1040 (not shown).

The contact section 1020 is provided on the front end of the holding section 1010. The contact section 1020 may be provided separately from the holding section 1010, and secured on the holding section 1010 using a bolt, an adhesive, or the like. In this embodiment, a rod-shaped transfer section 1022 is integrally molded with the holding section 1010 on the front end of the holding section 1010, and an elastic layer 1024 is formed on the outer circumferential surface of the transfer section 1022 when forming the elastic layer 1040 of the grip section 1002.

A head 1026 that is formed as part of the elastic layer 1024 is provided on the front end of the contact section 1020. The head 1026 corresponds to the end of the drumstick (i.e., a portion that directly comes in contact with a beating target due to a hitting operation during game play), and directly collides against a beating target due to a hitting operation. Since the head 1026 is formed as part of the elastic layer 1024, the head 1026 appropriately reduces impact to prevent damage to the game controller case 1000 while reducing noise. The impact reduced by the head 1026 is transferred to the holding section 1010 through the transfer section 1022, and detected as a change in acceleration by the game controller 1230 placed in the holding section 1010.

### Usage of game controller case

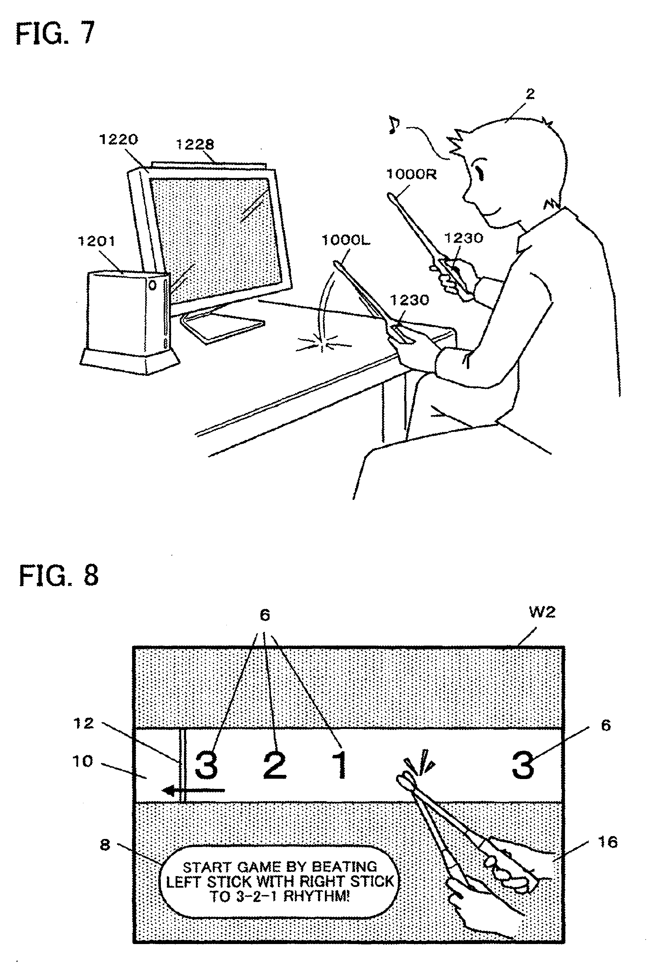

FIG. 7 is a view showing a game play style example according to this embodiment. As shown in FIG. 7, two game controllers 1230 are provided and placed in the game controller cases 1000R and 1000L during use. A player 2 plays the game by beating (hitting) an article (beating target) as if to play a percussion instrument using the game controller cases 1000R and 1000L as sticks (i.e., drumsticks) for playing a virtual percussion instrument.

A game screen W2 shown in FIG. 8 is displayed when the game has started. A start operation guide display 8 is displayed on the game screen W2. A performance start tempo display 6 ("3", "2", and "1 ") is also displayed on the game screen W2 so that the tempo display 6 moves from the right to the left in a music display section 10. An input timing indicator 12 is displayed at a fixed position on the left end of the music display section 10. The input timing indicator 12 indicates an input timing that occurs when the tempo display 6 has reached the input timing indicator 12. The speed and the interval of the tempo display 6 that moves in the music display section 10 vary corresponding to the tempo of a tune to be played.

An operation action guide 16 is displayed on the lower side of the game screen W2. An animation in which the game controller case 1000R held with the right hand is hit against the game controller case 1000L held with the left hand at a timing at which the tempo display 6 has reached the input timing indicator 12 is displayed as the operation action guide 16. Specifically, the operation action guide 16 instructs the player to beat the drumsticks together before starting a performance as if to imitate an actual drummer. When the player 2 has beaten the drumsticks together in accordance with the operation action guide 16, the game device main body 1201 (sound output control device) detects that a change in acceleration equal to or larger than a reference value has been simultaneously input from the game controller cases 1000R and 1000L (i.e., the player 2 has performed a game start operation), and starts the game.

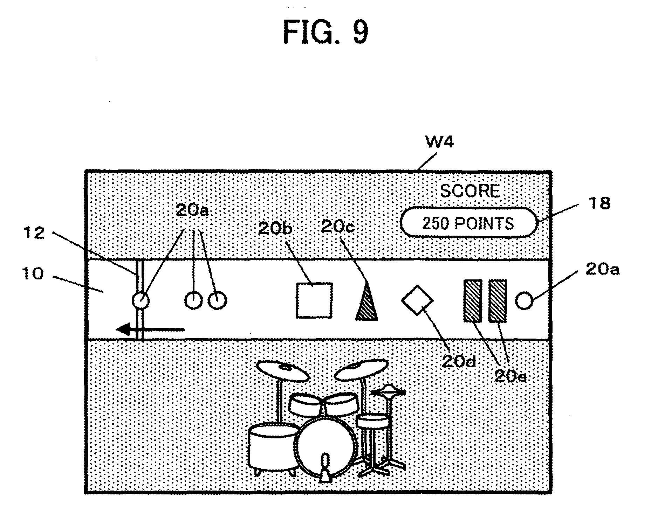

When the game has started, a tune is reproduced and output from the speaker 1224 of the video monitor 1220, and a game screen W4 shown in FIG. 9 is displayed on the display 1222, for example.

A mark 20 (20a, 20b, 20c, 20d, 20e, ...) that indicates the operation input type (i.e., the type of sound) is displayed from the right to the left in the music display section 10 on the game screen W4. When the player has performed an operation input corresponding to the mark 20 at a timing at which the mark 20 that moves in the music display section 10 has reached the input timing indicator 12, sound data (i.e., sound produced by each musical instrument that forms the drum set in this embodiment) corresponding to the operation input type is output from the speaker 1224 of the video monitor 1220. Therefore, the player can enjoy playing the virtual drum set to the tune.

The player can score points when the type of mark 20 that has reached the input timing indicator 12 coincides with the operation input type. The player cannot score points when the mark 20 is not displayed on the input timing indicator 12 when the player has performed an operation input due to an incorrect operation input timing. The player cannot score points when the type of mark 20 does not coincide with the operation input type. The total points obtained by the player are displayed in a point display section 18 on the upper side of the game screen W4.

### Operation input type association/determination method

A position determination method and an operation input type association/determination method according to this embodiment are described below.

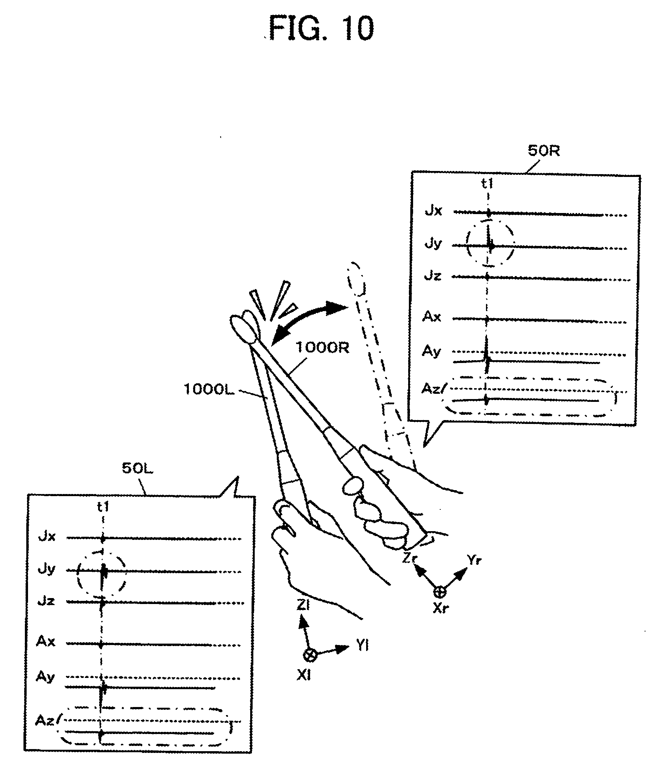

FIG. 10 is a view illustrative of the concept of start operation determination. Symbols 50R and 50L in FIG. 10 show waveform examples of the accelerations in three perpendicular axial directions (Xr-axis acceleration Ax, Yr-axis acceleration Ay, and Zr-axis acceleration Az) detected by the acceleration sensors 1246 of the game controllers 1230 placed in the game controller case 1000R held with the right hand and the game controller case 1000L held with the left hand and the jerks (time differentials) (Xl-axis jerk Jx, Yl-axis jerk Jy, and Zl-axis jerk Jz) ("0" is indicated by a dotted line).

In this embodiment, the player performs a start operation by hitting the game controller case 1000L that is held with the left hand in a state in which its tip faces upward with the game controller case 1000R that is held with the right hand in a state in which its tip faces upward. Specifically, when the player has performed the start operation, a reaction force in the direction (upward direction) opposite to the moving direction is applied to the game controller case 1000R, and an external force corresponding to the hitting operation is applied to the game controller case 1000L in a stationary state in the downward direction.

Therefore, a component of the gravitational acceleration is detected by the acceleration sensors 1246 of the game controllers 1230 placed in the game controller case 1000R and the game controller case 1000L as the Zr-axis and Zl-axis accelerations Az and the Yr-axis and Yl-axis accelerations Ay in the negative direction before the game controller case 1000R collides against the game controller case 1000L.

At a collision timing t1, a spike-like upward acceleration due to the collision reaction force is detected as the Yr-axis acceleration Ay of the game controller case 1000R, and a spike-like change in the positive direction is detected as the Yr-axis jerk Jy (time differential) of the game controller case 1000R. On the other hand, a spike-like downward acceleration is detected as the Yl-axis acceleration Ay of the game controller case 1000L, and a spike-like change in the negative direction is detected as the Yl-axis jerk Jy of the game controller case 1000L.

Therefore, it is determined that the game controller cases 1000R and 1000L have collided in a "front end upward/front side upward" state (i.e., the player has performed the start operation input) when an acceleration equal to or larger than a given upward position determination reference value has been detected as the Zr-axis and Zl-axis accelerations Az (condition (2)) for the right and left game controller cases 1000R and 1000L at the same timing t1 (condition (1)), and a positive Y-axis jerk Jy equal to or larger than a given hitting operation determination reference value has been detected for one of the game controller cases 1000R and 1000L and a negative Y-axis jerk Jy has been detected for the other of the game controller cases 1000R and 1000L (condition (3)). A stick hitting sound is associated with this operation input.

Since the player performs the start operation by hitting the game controller case 1000L with the game controller case 1000R, whether each game controller 1230 is placed in the game controller case 1000R or the game controller case 1000L can be automatically determined, such as determining the game controller case for which a positive spike-like waveform has been detected as the Y-axis jerk Jy at the timing t1 to be the game controller case 1000R, and determining the game controller case for which a negative spike-like waveform has been detected as the Y-axis jerk Jy at the timing t1 to be the game controller case 1000L. In this case, the player can use the game controllers 1230 without taking account of whether the game controller 1230 placed in each game controller case 1000 is a right game controller or a left game controller.

Note that the game controller 1230 may be registered as a right game controller or a left game controller before game play. In this case, the above-mentioned automatic game controller determination during the start operation is unnecessary.

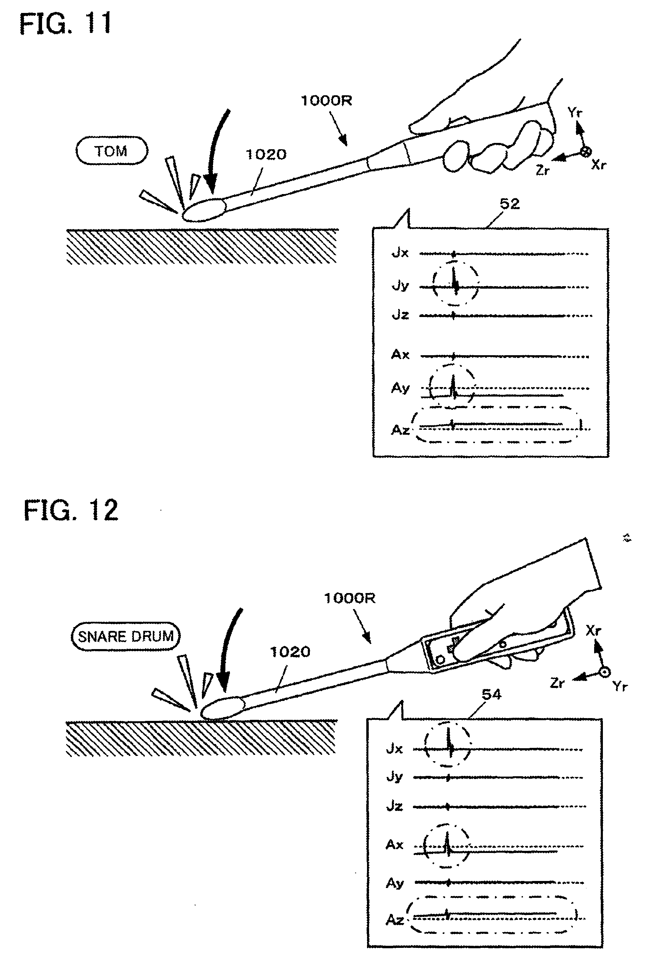

FIG. 11 shows an operation input when the player performs a beating (hitting) operation using the game controller case 1000R held with the right hand in a state in which the front side of the game controller 1230 faces upward and the front end of the game controller 1230 faces downward.

According to this operation input method, a negative acceleration (i.e., a component of gravitational acceleration) is detected as the Yr-axis acceleration Ay, and a positive acceleration is detected as the Zr-axis acceleration Az immediately before the end of the contact section 1020 comes in contact with the beating target (see 52). A reaction force is applied to the game controller case 1000R from the beating target when the player has hit the game controller case 1000R against the beating target from above so that a spike-like positive (upward) acceleration is detected as the Yr-axis acceleration Ay. A spike-like change in the positive direction that exceeds a given hitting operation determination reference value is also detected as the Yr-axis jerk Jy. A small change in acceleration that is regarded as noise is also detected as the Xr-axis acceleration Ax and the Zr-axis acceleration Az when the player has hit the game controller case 1000R against the beating target.

Therefore, it is determined that the player has performed a beating operation input in a "front end downward/front side upward" state when a positive Yr-axis jerk Jy equal to or larger than a given hitting operation determination reference value has been detected (condition (3)) for the right game controller 1230 (condition (1)) in a state (front end downward state) in which a positive acceleration is detected as the Zr-axis acceleration Az (condition (2)). A tom beating sound is associated with this operation input.

FIG. 12 shows an operation input performed by the player in a state in which the player rotates the right hand that holds the game controller case 1000R to the left by about 90° from the state shown in FIG. 11. Specifically, FIG. 12 shows a beating (hitting) operation input performed by the player in a state in which the front side of the game controller 1230 faces leftward and the front end of the game controller 1230 faces downward.

According to this operation input method, a negative acceleration (i.e., a component of gravitational acceleration) is detected as the Xr-axis acceleration Ax, and a positive acceleration is detected as the Zr-axis acceleration Az immediately before the end of the contact section 1020 comes in contact with the beating target (see 54). An upward reaction force is applied to the game controller case 1000R from the beating target when the player has hit the game controller case 1000R against the beating target so that a spike-like positive acceleration is detected as the Xr-axis acceleration Ax. A large spike-like change in the positive direction is also detected as the Xr-axis jerk Jx.

Therefore, it is determined that the player has performed a beating operation input in a "front end downward/front side leftward" state when a positive Xr-axis jerk Jx equal to or larger than a given hitting operation determination reference value has been detected (condition (3)) for the right game controller 1230 (condition (1)) in a state in which a positive acceleration is detected as the Zr-axis acceleration Az (condition (2)). A snare drum beating sound is associated with this operation input.

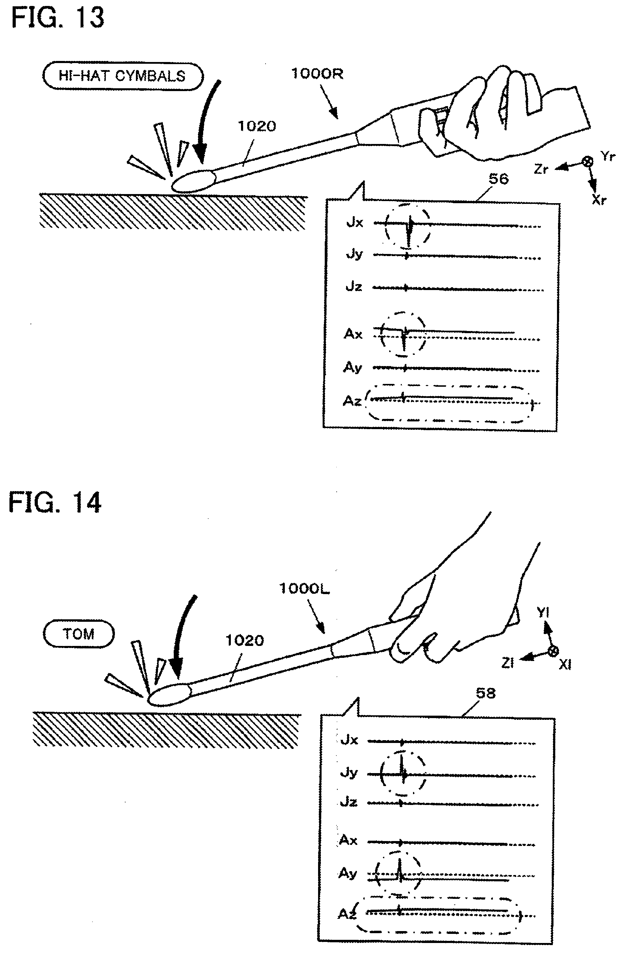

FIG. 13 shows an operation input performed by the player in a state in which the player rotates the right hand that holds the game controller case 1000R to the right by about 90° from the state shown in FIG. 11. Specifically, FIG. 13 shows a beating (hitting) operation input performed by the player in a state in which the front side of the game controller 1230 faces rightward and the front end of the game controller 1230 faces downward.

According to this operation input method, a positive acceleration (i.e., a component of gravitational acceleration) is detected as the Xr-axis acceleration Ax, and a positive acceleration is detected as the Zr-axis acceleration Az immediately before the end of the contact section 1020 comes in contact with the beating target (see 56). An upward reaction force is applied to the game controller case 1000R from the beating target when the player has hit the game controller case 1000R against the beating target from above so that a spike-like negative acceleration is detected as the Xr-axis acceleration Ax. A spike-like change in the negative direction is also detected as the Xr-axis jerk Jx.

Therefore, it is determined that the player has performed a beating operation input in a "front end downward/front side rightward" state when a negative Xr-axis jerk Jx equal to or larger than a given hitting operation determination reference value has been detected (condition (3)) for the right game controller 1230 (condition (1)) in a state in which a positive acceleration is detected as the Zr-axis acceleration Az (condition (2)). A hi-hat cymbal beating sound is associated with this operation input.

FIG. 14 shows an operation input when the player performs a beating (hitting) operation using the game controller case 1000L held with the left hand in a state in which the front side of the game controller 1230 faces upward and the front end of the game controller 1230 faces downward.

According to this operation input method, a negative acceleration (i.e., a component of gravitational acceleration) is detected as the Yl-axis acceleration Ay, and a positive acceleration is detected as the Zl-axis acceleration Az immediately before the end of the contact section 1020 comes in contact with the beating target (see 58). An upward reaction force is applied to the game controller case 1000L from the beating target when the player has hit the game controller case 1000L against the beating target from above so that a spike-like positive acceleration is detected as the Yl-axis acceleration Ay. A spike-like change in the positive direction is also detected as the Yl-axis jerk Jy.

Therefore, it is determined that the player has performed a beating operation input in a "front end downward/front side upward" state when a positive Yl-axis jerk Jy equal to or larger than a given hitting operation determination reference value has been detected (condition (3)) for the left game controller 1230 (condition (1)) in a state (front end downward state) in which a positive acceleration is detected as the Zl-axis acceleration Az (condition (2)). A tom beating sound is associated with this operation input.

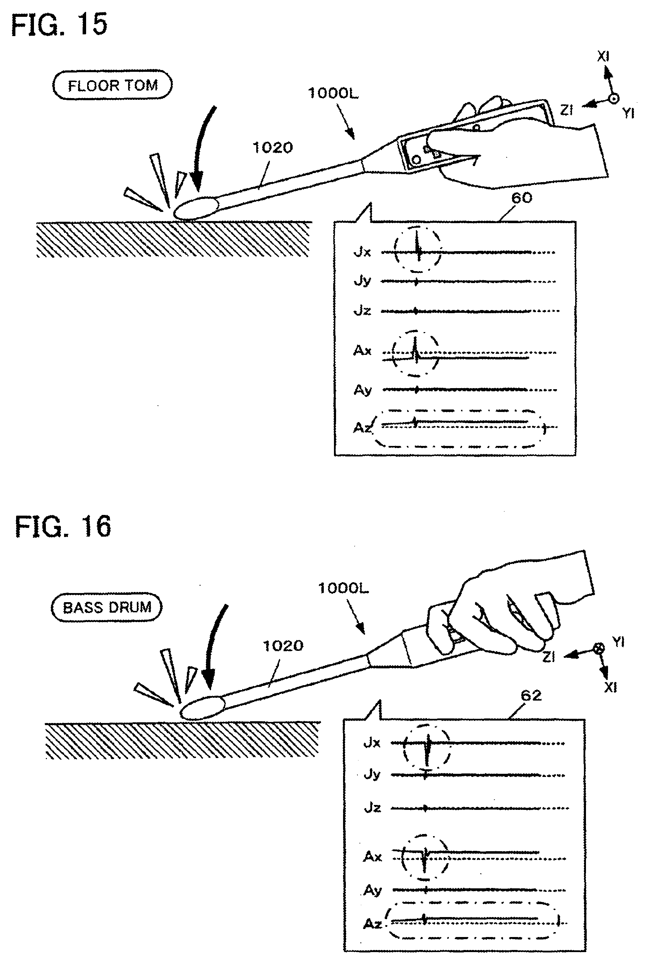

FIG. 15 shows an operation input performed by the player in a state in which the player rotates the left hand that holds the game controller case 1000L to the left by about 90° from the state shown in FIG. 14. Specifically, FIG. 15 shows a beating (hitting) operation input performed by the player in a state in which the front side of the game controller 1230 faces leftward and the front end of the game controller 1230 faces downward.

According to this operation input method, a negative acceleration (i.e., a component of gravitational acceleration) is detected as the Xl-axis acceleration Ax, and a positive acceleration is detected as the Zl-axis acceleration Az immediately before the end of the contact section 1020 comes in contact with the beating target (see 60). An upward reaction force is applied to the game controller case 1000L from the beating target when the player has hit the game controller case 1000L against the beating target so that a spike-like positive acceleration is detected as the Xl-axis acceleration Ax. A large spike-like change in the positive direction is also detected as the Xl-axis jerk Jx.

Therefore, it is determined that the player has performed a beating operation input in a "front end downward/front side leftward" state when a positive Xl-axis jerk Jx equal to or larger than a given hitting operation determination reference value has been detected (condition (3)) for the left game controller 1230 (condition (1)) in a state in which a positive acceleration is detected as the Zl-axis acceleration Az (condition (2)). A floor tom beating sound is associated with this operation input.

FIG. 16 shows an operation input performed by the player in a state in which the player rotates the left hand that holds the game controller case 1000L to the right by about 90° from the state shown in FIG. 14. Specifically, FIG. 16 shows a beating (hitting) operation input performed by the player in a state in which the front side of the game controller 1230 faces rightward and the front end of the game controller 1230 faces downward.

According to this operation input method, a positive acceleration (i.e., a component of gravitational acceleration) is detected as the Xl-axis acceleration Ax, and a positive acceleration is detected as the Zl-axis acceleration Az immediately before the end of the contact section 1020 comes in contact with the beating target (see 62). An upward reaction force is applied to the game controller case 1000R from the beating target when the player has hit the game controller case 1000R against the beating target from above so that a spike-like negative acceleration is detected as the Xl-axis acceleration Ax. A spike-like change in the negative direction is also detected as the Xl-axis jerk Jx.

Therefore, it is determined that the player has performed a beating operation input in a "front end downward/front side rightward" state when a negative Xl-axis jerk Jx equal to or larger than a given hitting operation determination reference value has been detected (condition (3)) for the left game controller 1230 (condition (1)) in a state in which a positive acceleration is detected as the Zl-axis acceleration Az (condition (2)). A bass drum beating sound is associated with this operation input.

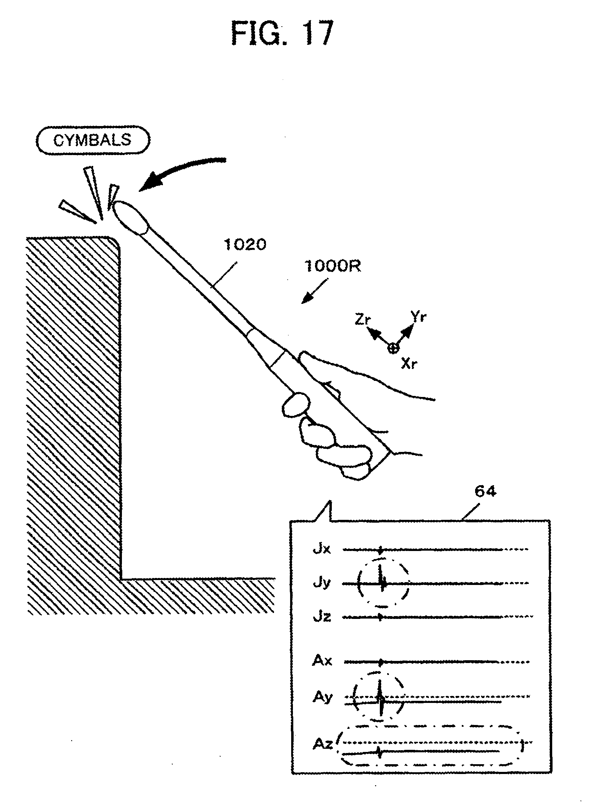

FIG. 17 shows an operation input when the player performs a beating (hitting) operation using only the game controller case 1000R held with the right hand in a state in which the front end of the game controller case 1000R faces upward.

According to this operation input method, a negative acceleration (i.e., a component of gravitational acceleration) is detected as the Yr-axis acceleration Ay, and a negative acceleration is detected as the Zr-axis acceleration Az immediately before the end of the contact section 1020 comes in contact with the beating target (see 64). A reaction force is applied to the game controller case 1000R from the beating target when the player has hit the game controller case 1000R against the beating target so that a spike-like positive acceleration is detected as the Yr-axis acceleration Ay. A spike-like change in the positive direction is also detected as the Yr-axis jerk Jy. This also applies to the left game controller case 1000L.

Therefore, it is determined that the player has performed a beating operation input in a "front end downward/front side upward" state when a positive Yr-axis or Yl-axis jerk Jy equal to or larger than a given hitting operation determination reference value has been detected (condition (3)) for the right or left game controller 1230 (condition (1)) in a state in which a negative acceleration is detected as the Zr-axis or Zl-axis acceleration Az (condition (2)). A cymbal beating sound is associated with this operation input.

The basic position determination method and operation input type association/determination method according to this embodiment have been described above. Note that the operation input type and its determination method are not limited thereto. A larger number of operation input types and sound types corresponding thereto are appropriately set in combination with the operations of the operation buttons of the game controller 1230, for example.

For example, when the player has performed an operation input associated with a tom sound shown in FIGS. 11 and 14 while operating the trigger 1244 or the like, the operation input type is determined to be another operation input type so that a successive tom sound (i.e., "tuck-tuck-tuck" instead of "tuck") or a sound stronger than a normal tom sound is associated with the operation input.

As another example, when the player has performed an operation input associated with a cymbal sound shown in FIGS. 13 and 17 while operating the trigger 1244 or the like, the operation input type is determined to be another operation input type so that a successive cymbal sound (i.e., sound is output when the player operates the trigger 1244) may be associated with the operation input, or a cymbal sound may be stopped earlier.

The factor taken into consideration when determining the operation input type is not limited to the ON/OFF operation of the trigger 1244, but may be the ON/OFF operation of the A button 1234 or the arrow key 1242, for example.

The range of virtual performance is widened by increasing the number of operation input types by utilizing an additional operation using the operation switch of the game controller 1230 so that various types of sound can be reproduced. In particular, when associating a successive sound with an operation input, an inexperienced player can enjoy the game since the player can easily and quickly play the drums. Moreover, even when the temporal resolution is insufficient due to filtering of the acceleration sensor 1246, the player can successively play the drums.

The strength of sound may be associated with the jerk Jx or Jy corresponding to each operation input instead of an additional switch operation. For example, when the jerk Jx or Jy exceeds a given strong hitting operation determination reference value, a louder or longer (e.g., cymbal) sound may be produced.

### Functional blocks

A functional configuration example that implements this embodiment is described below.

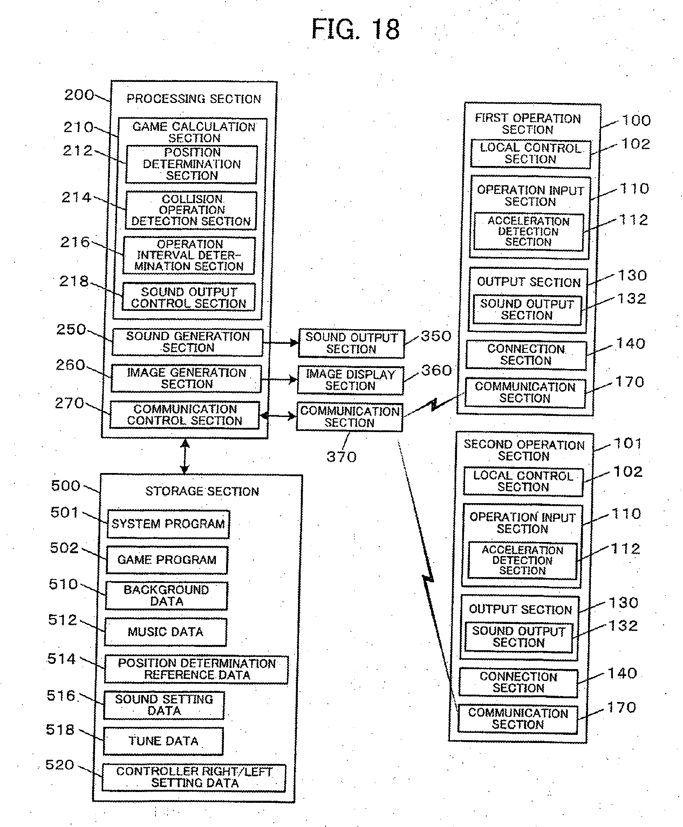

FIG. 18 is a functional block diagram showing a functional configuration example according to this embodiment. The sound output control system 1200 includes a first operation section 100, a second operation section 101, a processing section 200, a sound output section 350, an image display section 360, a communication section 370, and a storage section 500.

The first operation section 100 and the second operation section 101 correspond to the game controllers 1230. Each of the first operation section 100 and the second operation section 101 includes a local control section 102, an operation input section 110, an output section 130, a connection section 140, and a communication section 170. In this embodiment, the operation input section 110 includes an acceleration detection section 112.

The operation input section 110 is implemented by an input device and a sensor such as a push button, a lever, a touch pad, a dial, a keyboard, a mouse, a pointer, an acceleration sensor, a tilt sensor, a gyrosensor, a GPS, or an imaging element. The operation input section 110 outputs an operation input signal corresponding to an input performed by the player to the local control section 102.

In this embodiment, the A button 1234, the first to third sub-buttons 1236, the first button 1238, the second button 1240, the arrow key 1242, the trigger 1244, the acceleration sensor 1246, and the imaging element 1248 shown in FIG. 1 correspond to the operation input section 110.

The acceleration detection section 112 detects the accelerations of the first operation section 100 and the second operation section 101, and outputs detection signals corresponding to the detected accelerations to the local control section 102. The acceleration sensor 1246 shown in FIG. 2A corresponds to the acceleration detection section 112. The acceleration detection signal output to the local control section 102 is transmitted to the communication section 370 through the communication section 170 as an operation input signal.

The output section 130 is implemented by an output device such as a vibrator, a light, a speaker, a motor, or an image display element. The output section 130 outputs vibrations, light, sound, an operation, an image, or the like corresponding to the game process based on a control signal transmitted from the local control section 102. In this embodiment, the output section 130 includes a sound output section 132. In the example shown in FIG. 2A, the vibrator 1250 corresponds to the output section 130, and the speaker 1252 corresponds to the sound output section 132.

The connection section 140 is implemented by a connector, for example. The connection section 140 has a mechanism that connects an external signal line to a signal line provided in each of the operation sections 100 and 101 and detects the presence or absence of connection. The expansion terminal 1266 and the local bus circuit of the game controller 1230 shown in FIG. 2A correspond to the connection section 140.

The communication section 170 is implemented by an instrument such as a radio device or a LAN adaptor. The communication section 170 exchanges signals with an external device. The short-distance wireless communication module 1262 shown in FIG. 2 corresponds to the communication section 170. The communication section 170 implements data communication with the communication section 370 that corresponds to the short-distance wireless communication module 1214 (see FIG. 1) of the game device main body 1201.

The local control section 102 is implemented by an electronic component/electronic circuit such as a microprocessor (e.g., a CPU or a bus control IC that controls data communication through a local bus), an application-specific integrated circuit (ASIC), an IC memory, or a local bus. The local control section 102 controls input and output of data to and from each functional section corresponding to the operation input section 110 using a storage section (not shown) implemented by an IC memory or the like as a work area. The controller control unit 1260 shown in FIG. 2A corresponds to the local control section 102. The local control section 102 generates an operation input signal in a given cycle based on a signal input from the operation input section 110 and a signal input from the outside through the connection section 140, and transmits the operation input signal to the communication section 370 through the communication section 170.

The processing section 200 is implemented by an electronic component such as a microprocessor (e.g., CPU or GPU), an application-specific integrated circuit (ASIC), or an IC memory. The processing section 200 controls the operation of the sound output control system 1200 by exchanging data with each functional section and performing various calculations based on a given program, data, and the operation input signals input from the first operation section 100 and the second operation section 101.

In FIG. 1, the control unit 1210 provided in the game device main body 1201 (sound output control device) corresponds to the processing section 200. The processing section 200 according to this embodiment includes a game calculation section 210, a sound generation section 250, an image generation section 260, and a communication control section 270.

The game calculation section 210 performs a game process. For example, the game calculation section 210 performs a game process (e.g., operation input timing determination or score calculation), a result determination process, and the like. The game calculation section 210 according to this embodiment includes a position determination section 212, a collision operation detection section 214, an operation interval determination section 216, and a sound output control section 218.

The position determination section 212 determines the virtual performance (beating operation) input timing and the positions of the first operation section 100 and the second operation section 101 at the input timing based on acceleration information that is detected by the acceleration detection section 112 and received from the first operation section 100 and the second operation section 101 through the communication section 370.

Specifically, as described with reference to FIGS. 10 to 17, the position determination section 212 calculates the jerks Jx, Jy, and Jz, and determines that a virtual performance operation input has been performed at an input timing at which one of the jerks Jx, Jy, and Jz has changed in the positive direction or the negative direction to a value larger than the hitting operation determination reference value. The position determination section 212 determines the positions of the first operation section 100 and the second operation section 101 from six positions (i.e., combinations of front end upward/downward and front side upward/rightward/leftward) based on the detection pattern of the accelerations Ax, Ay, and Az immediately before the input timing.

The collision operation detection section 214 detects a collision operation input that hits the game controller case 1000R in a "front end upward/front side upward" state described with reference to FIG. 10 against the game controller case 1000L in a "front end upward/front side upward" state.

The operation interval determination section 216 determines the time intervals of the beating operation described with reference to FIGS. 11 and 14 based on acceleration information received from the first operation section 100 and the second operation section 101 through the communication section 370. Specifically, the operation interval determination section 216 temporarily stores the input timing of the beating operation using the first operation section 100 or the second operation section 101 in a "front end downward/front side upward" state in the storage section 500, and calculates the time interval between the input timings when temporarily storing the input timing of the next beating operation. When the calculated time interval is less than a given difficulty level reference time, the operation interval determination section 216 determines that the player has performed the beating operation at a short time interval that is difficult for a player who is not a professional drummer. The operation interval may be determined by determining the speed of successive beating operations performed by the player in multiple stages instead of determining whether or not the operation interval is short.

The sound output control section 218 variably controls sound output from the sound output section 350 and the sound output section 132 based on the beating operation position determined by the position determination section 212, the detection result of the collision operation detection section 214, the determination result of the operation interval determination section 216, and the like. Specifically, the sound output control section 218 determines the type of sound associated with the beating operation position determined by the position determination section 212, the detection result of the collision operation detection section 214, the determination result of the operation interval determination section 216, and the like referring to position determination data 514 stored in the storage section 500, and extracts sound data of the determined type from sound setting data 516. The sound output control section 218 causes the sound generation section 250 to generate a sound signal based on the extracted sound data, and causes the sound output section 350 to reproduce and output the sound signal. Alternatively, the sound output control section 218 transmits the generated sound signal to the first operation section 100 and the second operation section 101 through the communication section 370, and causes the sound output section 350 to reproduce and output the sound signal.

The sound generation section 250 is implemented by a processor such as a digital signal processor (DSP) and its control program, for example. The sound generation section 250 generates a sound signal of game-related effect sound, background music (BGM), or operation sound based on the processing results of the game calculation section 210, and outputs the generated sound signal to the sound output section 350.

The sound output section 350 is implemented by a device that outputs sound such as effect sound or BGM based on the sound signal input from the sound generation section 250. In FIG. 1, the speaker 1224 of the video monitor 1220 corresponds to the sound output section 350.

The image generation section 260 is implemented by a microprocessor such as a GPU or a digital signal processor (DSP), its control program, a drawing frame IC memory such as a frame buffer, or the like. The image generation section 260 generates image signals corresponding to one game image at a given refresh rate (e.g., 1/60th of a second) based on the processing results of the game calculation section 210, and outputs the game image signals to the image display section 360.

The image display section 360 displays various game images based on the image signals input from the image generation section 260. The image display section 360 may be implemented by an image display device such as a flat panel display, a cathode-ray tube (CRT), a projector, or a head mount display. In FIG. 1, the image display device 1222 of the video monitor 1220 corresponds to the image display section 360.

The communication control section 270 performs a data communication process to exchange data with an external device through the communication section 370.

The communication section 370 connects to the communication channel 1 to implement communication. The communication section 370 is implemented by a transceiver, a modem, a terminal adapter (TA), a jack for a communication cable, a control circuit, or the like. In FIG. 1, the communication device 1212 and the short-distance wireless communication module 1214 correspond to the communication section 370.

The storage section 500 stores a predetermined program and data, and is used as a work area for the processing section 200. The storage section 500 temporarily stores the results of calculations performed by the processing section 200 based on various programs, for example. The function of the storage section 500 is implemented by an IC memory (e.g., RAM, ROM, or EEPROM), a magnetic disk (e.g., hard disk), or an optical disk (e.g., CD-ROM, DVD-RAM, or MO), for example. In FIG. 1, the IC memory provided in the control unit 1210, the optical disk 1202, and the memory card 1204 correspond to the storage section 500.

The storage section 500 according to this embodiment stores a system program 501 that implements a function for causing the processing section 200 to control the sound output control system 1200, a game program 502 necessary for causing the processing section 200 to execute the game, various types of data, and the like. The function of the game calculation section 210 may be implemented by the processing section 200 by causing the processing section 200 to read and execute the game program 502.

The storage section 500 also stores background data 510, music data 512, position determination reference data 514, sound setting data 516, and tune data 518 that are provided in advance. The storage section 500 may appropriately store controller right/left setting data 520, a counter (value), a timer (value), a flag, and the like as data that is appropriately generated and stored during game play.

The background data 510 is image data that forms the background of the game screen shown in FIGS. 8 and 9.

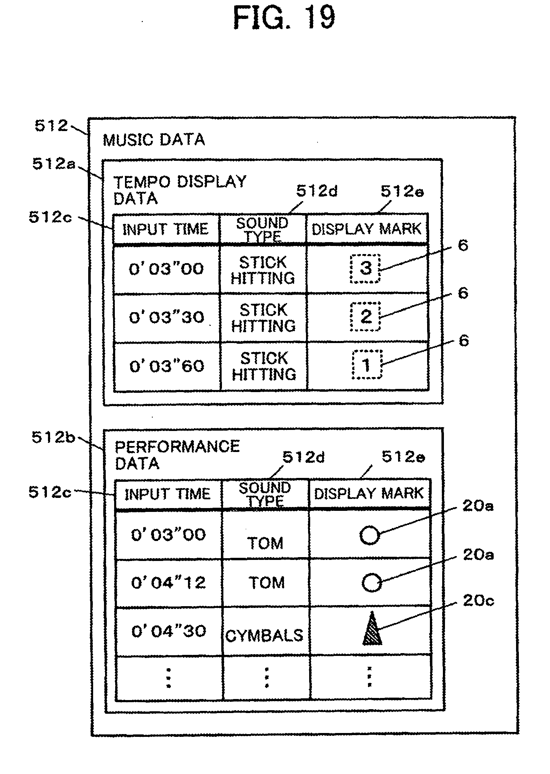

The music data 512 is data for displaying the tempo display 6 and the mark 20 in the music display section 10. The music data 512 is provided corresponding to each tune while being associated with the tune data 516. As shown in FIG. 19, the music data 512 includes tempo display data 512a and performance data 512b, for example. The tempo display data 512a is used to display the music in a loop until the player performs the start operation input when the game screen W2 shown in FIG. 10 is displayed. The performance data 512b is used during game play after the player has performed the start operation input. An input time 512c that indicates the time required for the tempo display 6 or the mark 20 to reach the input timing indicator 12 after the performance has started, a sound type 512d that should be input at the input timing, and a display mark 512e (e.g., the tempo display 6 or the mark 20) that is displayed are stored as the tempo display data 512a and the performance data 512b.

According to the tempo display data 512a shown in FIG. 19, the tempo display 6 is displayed when the game screen W2 has been displayed. The tempo display 6 sequentially reaches the input timing indicator 12 when three seconds has elapsed. Then, the tempo display 6 is again displayed and sequentially reaches the input timing indicator 12 when three seconds has elapsed. This operation is repeated until the player performs the start operation input.

Reference data used when determining the position of the game controller 1230 during the beating operation is stored as the position determination reference data 514.

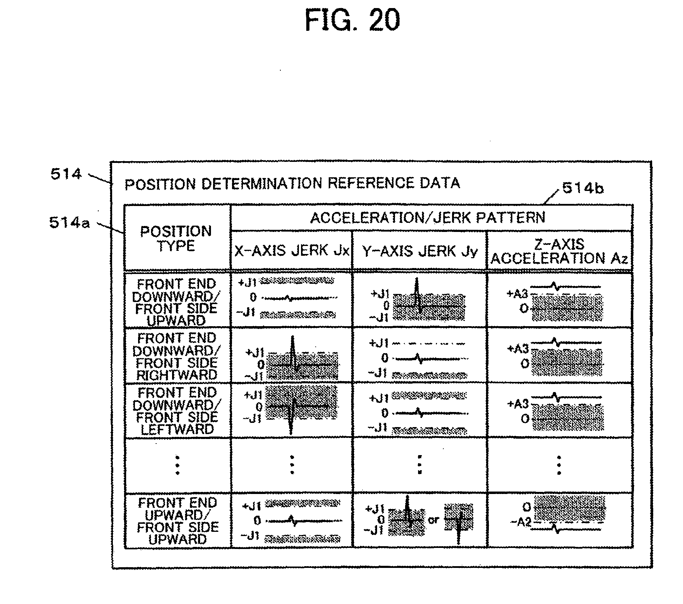

As shown in FIG. 20, a position type 514a and an acceleration/jerk pattern 514b used to determine the position type are stored as the position determination reference data 514, for example. In FIG. 20, the acceleration/jerk pattern 514b is indicated by the acceleration or jerk waveform. The range that is not hatched corresponds to the requirement for determining the position type. In FIG. 20, "11" indicates the hitting operation determination reference value (beating operation determination reference value), "A2" indicates the downward position determination reference value, and "A3" indicates the upward position determination reference value. For example, it is determined that the game controller 1230 is in a "front end downward/front side upward" state when the X-axis jerk Jx is less than the hitting operation determination reference value "J1", the Y-axis jerk Jy is a positive value equal to or larger than the hitting operation determination reference value "J1", and the Z-axis acceleration Az is equal to or larger than the upward position determination reference value "+A3" (the combination of the uppermost row in FIG. 20). It is determined that the game controller 1230 is in a "front end upward/front side upward" state when the X-axis jerk Jx is less than the hitting operation determination reference value "J1", the Y-axis jerk Jy is equal to or larger than the hitting operation determination reference value "J1", and the Z-axis acceleration Az is less than the downward position determination reference value "-A2" (the combination of the lowermost row in FIG. 20).

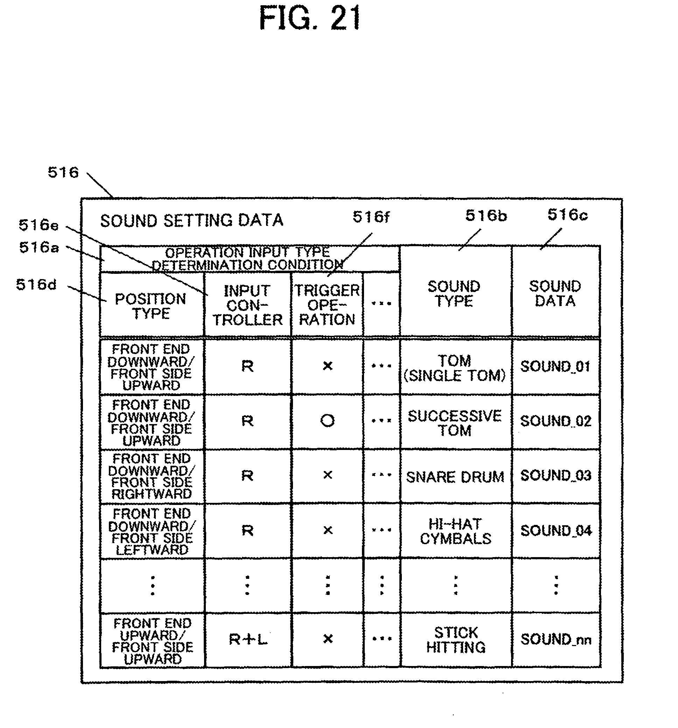

An operation input type determination condition and sound data produced by the virtual percussion instrument corresponding to each operation input type are stored as the sound setting data 516. As shown in FIG. 21, an operation input type determination condition 516a, a sound type 516b, and sound data 516c are stored as the sound setting data 516, for example. The operation input type determination condition 516a includes a position type 516d, an input controller 516e, a trigger operation 516f, and the like.

In the example shown in FIG. 21, the sound type 516b differs corresponding to the presence or absence of the trigger operation 516f even if the position type 516d and the input controller 516e are identical (see the combination of the uppermost row and the combination of the second row). When the trigger operation 516f is not performed (indicated by "×"), sound produced by beating the tom once (e.g., "tum") is set as the sound type 516b. When the trigger operation 516f is performed, sound produced by successively beating the tom (e.g., "tumtum") is set as the sound type 516b. The condition "R+L (right+left)" is set as the input controller 516e in the combination in the lowermost row (i.e., simultaneous input is required). The sound type 516b produced by beating the drumsticks together is associated with this combination.

The operation of the arrow key 1242 or the button A 1234 may be appropriately set as the operation input type determination condition 516a. A jerk reference value that determines the strength of the hitting operation may be set as the operation input type determination condition 516a, and whether or not the X-axis jerk Jx or the Y-axis jerk Jy exceeds the strength reference value (i.e., whether or not the virtual percussion instrument has been hit hard) may be appropriately added as the determination factor. In this case, sound produced by strongly beating the drum (e.g., tom or snare drum) or sound that continues strongly for a long time (e.g., hi-hat cymbals or cymbals) may be set as the sound data 516c corresponding to the operation input that exceeds the strength reference value.

The tune data 518 is tune data that is virtually played by the player. In this embodiment, since the player virtually plays the drum set, tune data from which the drum part is excluded is stored as the tune data 518.

Setting information that indicates the right and left game controllers 1230 is stored as the controller right/left setting data 520. In this embodiment, the game controller 1230 for which a positive Y-axis jerk Jy has been detected during the start operation is set to be the right game controller, and the game controller 1230 for which a negative Y-axis jerk Jy has been detected during the start operation is set to be the left game controller. Note that the right and left game controllers may be automatically set in the order of the identification number set by a pairing process between the short-distance wireless modules of the game controller 1230 and the game device main body 1201. Alternatively, the player may appropriately set the right and left game controllers 1230. Process flow

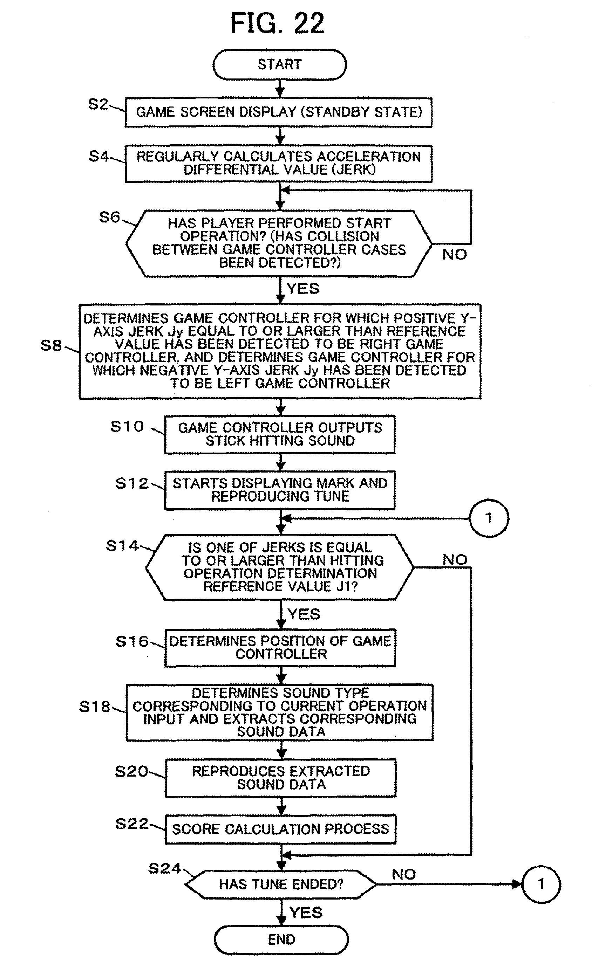

FIG. 22 is a flowchart illustrative of the flow of a process according to this embodiment. A series of processes described below is implemented by causing the processing section 200 to read the system program 501 and the game program 502 from the storage section 500 and execute the system program 501 and the game program 502. The game controllers 1230 are respectively placed in the game controller cases 1000R and 1000L before executing the process.

As shown in FIG. 22, the processing section 200 displays a standby game screen (e.g., the game screen W2 shown in FIG. 8) referring to the background data 510 and the music data 512 (step S2). The game screen instructs the player to perform the start operation. The player who watches the game screen holds the grip sections 1002 of the game controller cases 1000R and 1000L so as to cover the holding section 1010 as if to hold a stick, and performs the start operation in accordance with the instruction displayed on the screen.

The processing section 200 starts to calculate the jerks Jx, Jy, and Jz based on the acceleration information Ax, Ay, and Az transmitted from the game controller 1230 (step S4). The processing section 200 then regularly calculates the jerks based on the received acceleration information.

The processing section 200 waits for the player to perform the start operation input. Specifically, the processing section 200 waits for detection of collision between the game controller cases (step S6).

Specifically, the processing section 200 determines that the game controller cases 1000R and 1000L have collided (i.e., the player has performed the start operation input) when an acceleration less than the downward position determination reference value "-A2" has been detected as the Z-axis acceleration Az (condition (2)) for the right and left game controller cases 1000R and 1000L at the same timing t1 (condition (1)), and a positive Y-axis jerk Jy equal to or larger than the hitting operation determination reference value "+J1" has been detected for one of the game controller cases 1000R and 1000L and a negative Y-axis jerk Jy less than the hitting operation determination reference value "-J1" has been detected for the other of the game controller cases 1000R and 1000L (condition (3)).

When the processing section 200 has determined that the player has performed the start operation input (YES in step S6), the processing section 200 determines the game controller 1230 for which a positive Y-axis jerk Jy equal to or larger than a given hitting operation determination reference value "+J1" has been detected to be the right game controller, determines the game controller 1230 for which a negative Y-axis jerk Jy has been detected to be the left game controller, and stores the determination results in the storage section 500 as the controller right/left setting data 520 (step S8). Specifically, the player holds the game controller cases 1000R and 1000L without taking account of the right and left game controller cases, and then performs the start operation input so that the right and left game controllers 1230 are automatically determined.

Note that the step 8 may be omitted when the right and left game controllers 1230 are set in advance by the pairing process. In this case, the player must selectively hold the right and left game controller cases 1000R and 1000L.

When the processing section 200 has determined that the player has performed the start operation input, the processing section 200 transmits the "stick hitting" sound data (see FIG. 20) to the game controller 1230, and causes the speaker 1252 of the game controller 1230 to reproduce and output the sound data (step S10). The processing section 200 then displays the mark 20 in the music display section 10 (see the game screen W4 shown in FIG. 9), and causes the tune data 518 to be reproduced by the speaker 1224 of the video monitor 1220 (step S12). The player starts a virtual percussion instrument performance by beating the game controller cases 1000R and 1000L against something as if to operate drumsticks while listening to the tune reproduced in synchronization with display of the mark on the game screen.

When the processing section 200 has determined that one of the calculated jerks is equal to or larger than the hitting operation determination reference value "J1 (YES in step S 14), the processing section 200 determines that the player has performed a hitting operation. The processing section 200 refers to the position determination reference data 514, and determines the position of the game controller 1230, for which the jerk equal to or larger than the hitting operation determination reference value "J1" has been detected, at the operation input timing using the detected jerk, acceleration, and the like (step S16).

The processing section 200 then refers to the sound setting data 516, determines the sound type corresponding to the current operation input based on the determined position and the presence or absence of the operation of the operation button (e.g., trigger operation), and extracts the corresponding sound data 516c (step S18).

The processing section 200 causes the sound of the extracted sound data 516c to be reproduced by the speaker 1224 of the video monitor 1220 (step S20).

The processing section 200 executes a score calculation process (step S22). Specifically, the processing section 200 refers to the performance data 512b stored as the music data 512, and extracts the sound type 512d for which the input time 512c is within a given input error allowable range around the input timing of the current operation input (e.g., the elapsed time from the start of the performance). When the processing section 200 has extracted the sound type 512d for which the input time 512c is within the input error allowable range and the sound type 512d coincides with the sound type 516b corresponding to the current operation input determined in the step S18, the processing section 200 adds given points to the score of the player. The score may be calculated by appropriately applying a method similar to that of a known music game in which the mark 20 is displayed in the music display section 10, for example.

When the tune has not ended (NO in step S24), the processing section 200 returns to the step S14. When the tune has ended (YES in step S24), the processing section 200 finishes the series of processes and finishes the game.

According to this embodiment, the player can enjoy a virtual percussion instrument performance by placing a general-purpose game controller in the game controller case that imitates a stick used to play the percussion instrument.

Moreover, hardware that detects the accelerations and transmits the detected acceleration information to the game device main body 1201 (sound output control device) can be implemented by utilizing a general-purpose game controller. Therefore, since it suffices that the player purchase a pair of game controller cases 1000 having a simple structure without separately providing a dedicated game controller, the burden imposed on the player in terms of cost can be reduced.

The game controller cases 1000R and 1000L are formed to imitate drumsticks. Since the sound of each percussion instrument of the drum set is reproduced in the music game by performing a hitting operation using the game controller cases 1000R and 1000L, the player can enjoy playing the percussion instrument as if the player were a drummer.

Moreover, since the player can produce the sound of various percussion instruments of the drum set by changing the positions of the game controller cases 1000R and 1000L when performing the operation input, the game playability is improved, and the player can enjoy playing the drums by an easy operation.

According to this embodiment, the game starts when the player has hit the game controller case 1000R against the game controller case 1000L, and the stick hitting sound is reproduced by the speaker 1252 of the game controller 1230. A novel production effect such as one that allows the player to start a performance by getting into the rhythm by hitting the drumsticks together enables the player to further involve himself in the drumming game.

According to this embodiment, since the right and left game controller cases 1000R and 1000L are set automatically, the user (player) can start the game play without taking account of the right and left game controller cases 1000R and 1000L. This enables the player to further involve himself in the drumming game.

### Second embodiment

A second embodiment to which the invention is applied is described below. The configuration according to this embodiment is basically the same as the configuration according to the first embodiment, but differs from the configuration according to the first embodiment as to the configuration of the game controller case. In this embodiment, (1) a performance guide section is provided, and (2) the output interval of intermittent sound (e.g., "tom (single tom)") is adjusted corresponding to the time interval of the hitting operation as elements that assist an inexperienced player. The same elements as those of the first embodiment are indicated by the same symbols. Description of these elements is omitted.

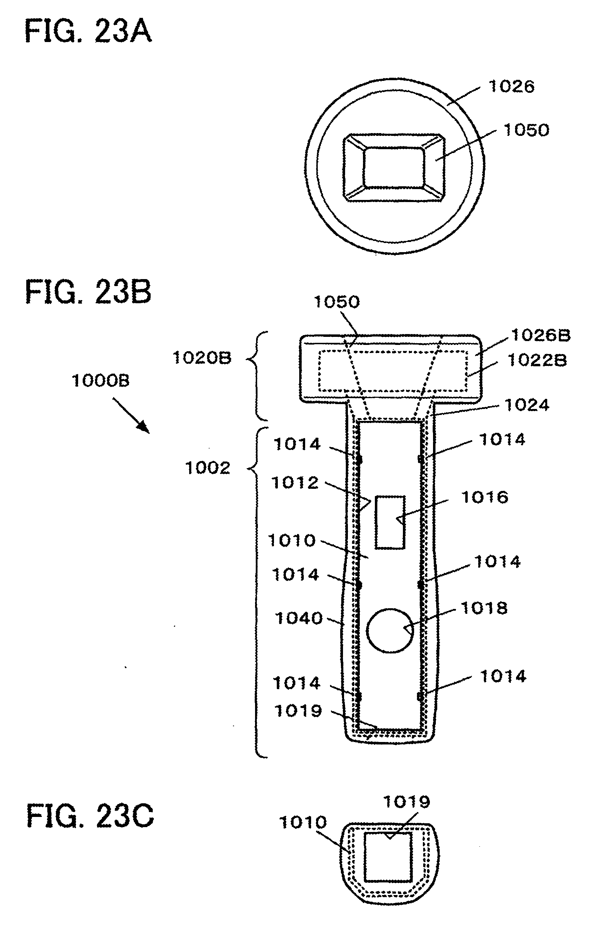

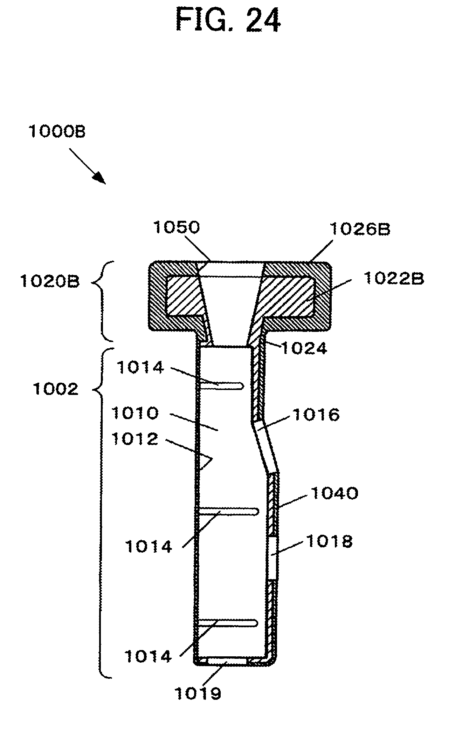

FIGS. 23A to 23C are external views showing a configuration example of a game controller case 1000B according to this embodiment. FIG. 23A is a front side view, FIG. 23B is a front (top) view, and FIG. 23C is a rear side view. FIG. 24 is a vertical cross-sectional view showing the game controller case 1000B.

The game controller case 1000B differs from the game controller case 1000 according to the first embodiment as to the shape of a contact section 1020B. Specifically, while the head 1026 according to the first embodiment is approximately formed in the shape of a rugby ball and has almost the same thickness as that of the grip section 1002, the head 1026 according to this embodiment is formed in the shape of a disk having a diameter larger than the thickness of the grip section 1002 so that the game controller case 1000B is formed to imitate a short timpani mallet..

An imaging window 1050 that allows the imaging element 1248 of the game controller 1230 placed in the game controller case 1000B to image the state in front of the game controller case 1000B is provided, the imaging window 1050 being formed from the front wall surface of the holding section 1010 through the transfer section 1022B and the head 1026B.

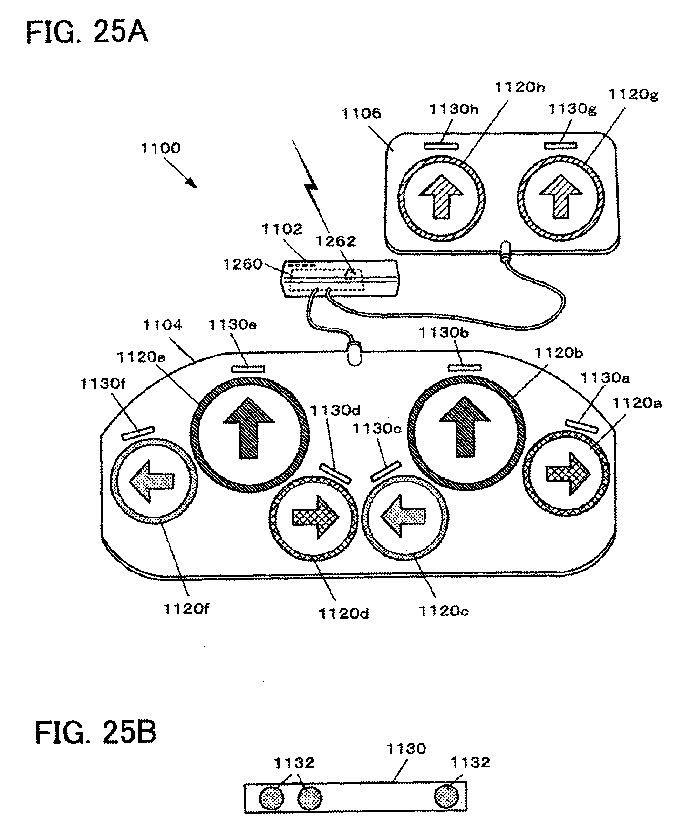

FIG. 25A is an external view showing a configuration example of a performance guide section 1100. The performance guide section 1100 includes a control section 1102 that can communicate with the game device main body 1201, and a first guide display section 1104 and a second guide display section 1106 that are connected to the control section 1102 via cables. The performance guide section 1100 is sold together with the game controller case set 1250, or is sold as an optional component.

The control section 1102 corresponds to the controller control unit 1260 of the game controller 1230 that is separately provided in an independent case. The control section 1102 can perform data communication with the short-distance wireless module 1214 of the game device main body 1201 through a short-distance wireless module 1262 provided in the control section 1102. The control section 1102 electronically and electrically controls the first guide display section 1104 and the second guide display section 1106 based on a control signal received from the game device 1201.

The first guide display section 1104 and the second guide display section 1106 are formed in the shape of a sheet or a thin sheet that guides the hitting operation position during a virtual performance and the positions of the game controller cases 1000R and 1000L when performing an operation input.

The first guide display section 1104 is placed flatly on the top surface of a table or the like having a height that allows the player to perform a hitting operation while directing the end of the game controller cases 1000R and 1000L downward, for example. The second guide display section 1106 guides the player when the player performs a hitting operation while directing the end of the game controller cases 1000R and 1000L upward. Therefore, the second guide display section 1106 is disposed against something or suspended at a position higher and deeper than the first guide display section 1104.

A plurality of guide marks 1120 (1120a, 1120b, ...) for producing the sound of each percussion instrument (i.e., tom, floor tom, snare drum, bass drum, and hi-hat cymbals) of a drum set are printed on the top surface of the first guide display section 1104.

Specifically, a hi-hat cymbal guide mark 1120a, a right tom guide mark 1120b, and a snare drum guide mark 1120c are provided from the right to the center. A bass drum guide mark 1120d, a left tom guide mark 1120e, and a floor tom guide mark 1120f are provided from the center to the left. Likewise, a left cymbal guide mark 1120h and a right cymbal guide mark 1120g are provided on the top surface of the second guide display section 1106 as the guide marks 1120 for producing the sound of cymbals of the drum set.

Each guide mark 1120 is provided with an arrow mark of a color that indicates the position of each of the game controller cases 1000R and 1000L when the player performs an operation input.

For example, the right tom guide mark 1120b and the left tom guide mark 1120e are provided with a red upward arrow (an arrow in the depth direction when viewed from the player) so that the player operates the game controller cases 1000R and 1000L in a "front end downward/front side upward" state. Likewise, the snare drum guide mark 1120c and the floor tom guide mark 1120f are provided with a blue leftward arrow so that the player operates the game controller cases 1000R and 1000L in a "front end downward/front side leftward" state. The hi-hat cymbal guide mark 1120a and the bass drum guide mark 1120d for are provided with a green rightward arrow so that the player operates the game controller cases 1000R and 1000L in a "front end downward/front side rightward" state. The right cymbal guide mark 1120g and the left cymbal guide mark 1120h are provided with a yellow upward arrow so that the player operates the game controller cases 1000R and 1000L in a "front end upward/front side upward" state.

Each guide mark 1120 is provided with a light-emitting section 1130 (1130a to 1130h). The light-emitting section 1130 is implemented by a light-emitting element (e.g., LED) buried in the guide display section 1104 or 1106. The light-emitting section 1130 is individually turned ON/OFF under control of the control section 1102.

Specifically, as indicated by an enlarged view shown in FIG. 25B, one LED 1132 is provided on one end of the linear light-emitting section 1130, and two LEDs 1132 are provided on the other end of the light-emitting section 1130. The light-emitting section 1130 is controlled to emit light for a given period (e.g., 1 second) around the input timing corresponding to each guide mark 1120 to indicate the operation input type and the input timing to the player.

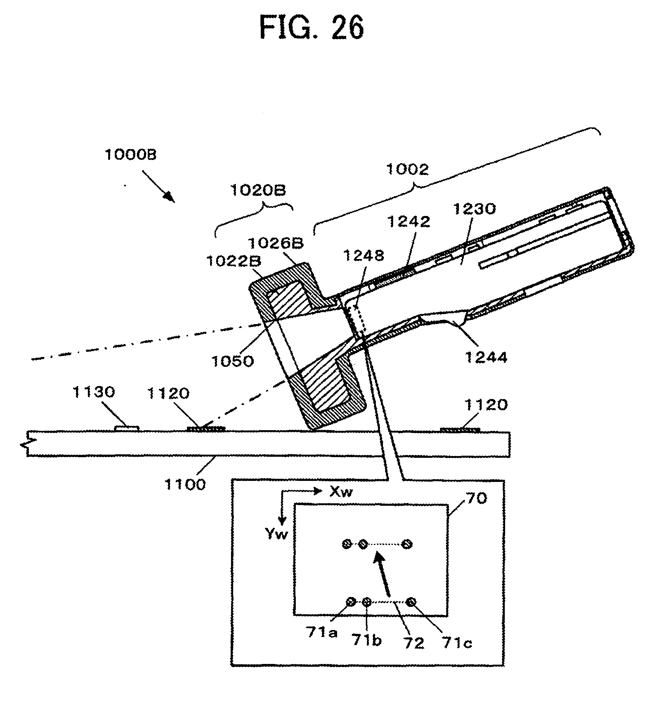

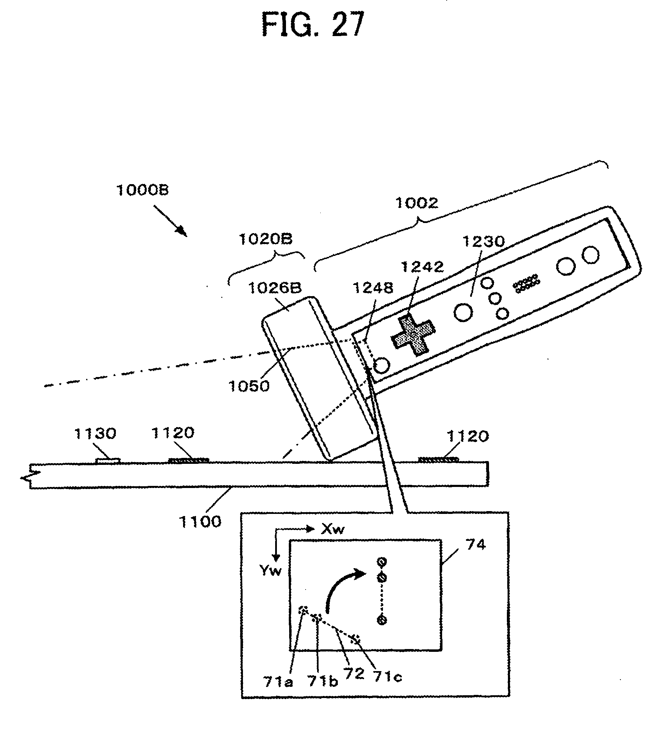

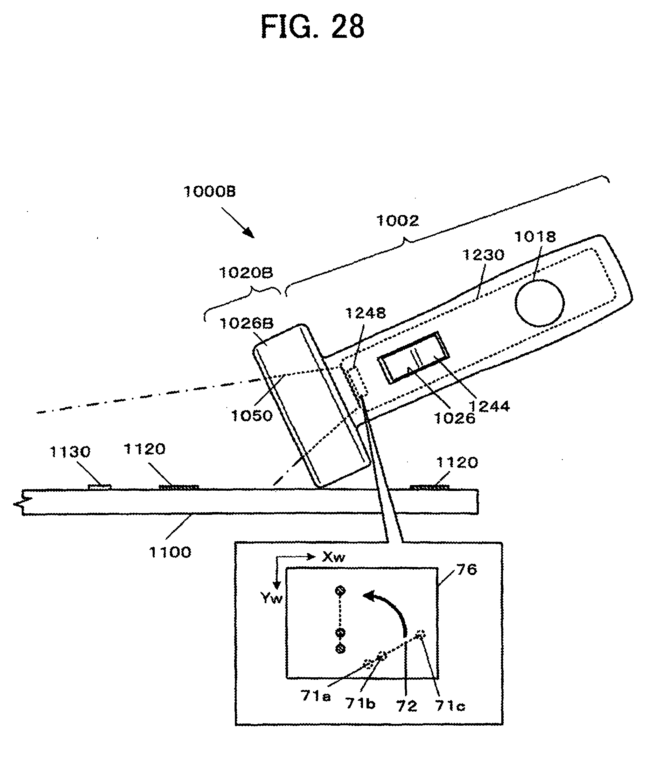

FIGS. 26 to 28 are schematic views illustrative of the state during a hitting operation according to this embodiment, and the principle of determining the position of the game controller 1230 using an image taken by the imaging element 1248. FIG. 26 shows a "front end downward/front side upward" state, FIG. 27 shows a "front end downward/front side leftward" state, and FIG. 28 shows a "front end downward/front side rightward" state.

As shown in FIGS. 26 to 28, when the player has beaten the guide mark 1120 of the operation guide 1100 with the head 1026B of the game controller case 1000B, the imaging element 1248 images the light-emitting section 1130 through the imaging window 1250.

When the player performs an operation input in a "front end downward/front side upward" state, since the guide marks 1120b and 1120e that indicate the operation input in a "front end downward/front side upward" state are disposed on the right and left of the front side at an interval approximately corresponding to the breadth of the shoulders, the player can perform the operation input by moving the arms downward. Therefore, as indicated by an image 70 shown in FIG. 26, emission points 71 (71a, 71b, and 71c) of the LEDs 1132 of the light-emitting section 1130 are imaged (arranged) almost in the transverse direction. When it is determined that a straight line 72 that connects the emission points 71 are arranged along a horizontal axis Xw in a screen coordinate system Xw and Yw, the probability that the player has performed the operation input in a front side upward state is high.

When the player performs an operation input in a "front end downward/front side leftward" state, the player turns the elbows toward the guide marks 1120c and 1120f on the left of the guide marks 1120b and 1120e while turning the wrists to the left.

Therefore, when the player has performed the operation input in a "front end downward/front side leftward" state, the straight line 72 that connects the emission points 71 of the LEDs 1132 moves as indicated by an image 74 shown in FIG. 27. Specifically, the straight line 72 moves so that the emission points 71a and 71b move upward clockwise.

More specifically, the position of the straight line 72 moves to the right of the screen so that (i) the emission points 71a and 71b are positioned on the upper side of the emission point 71c and (ii) the straight line 72 rotates clockwise around the emission point 71 c. Therefore, when the feature (i) or (ii) has been detected, the probability that the player has performed the operation input in a front side leftward state is high.

Likewise, when the player performs an operation input in a "front end downward/front side rightward" state, the player turns the elbows toward the guide marks 1120a and 1120d on the right of the guide marks 1120b and 1120e while turning the wrists to the right.

Therefore, when the player has performed the operation input in a "front end downward/front side rightward" state, the straight line 72 that connects the emission points 71 of the LEDs 1132 moves as indicated by an image 76 shown in FIG. 28. Specifically, the straight line 72 moves so that the emission points 71a and 71b move downward counterclockwise.

More specifically, the position of the straight line 72 moves to the left of the screen so that (iii) the emission points 71a and 71b are positioned on the lower side of the emission point 71c and (iv) the straight line 72 rotates counterclockwise around the emission point 71c. Therefore, when the feature (iii) or (iv) has been detected, the probability that the player has performed the operation input in a front side rightward state is high.

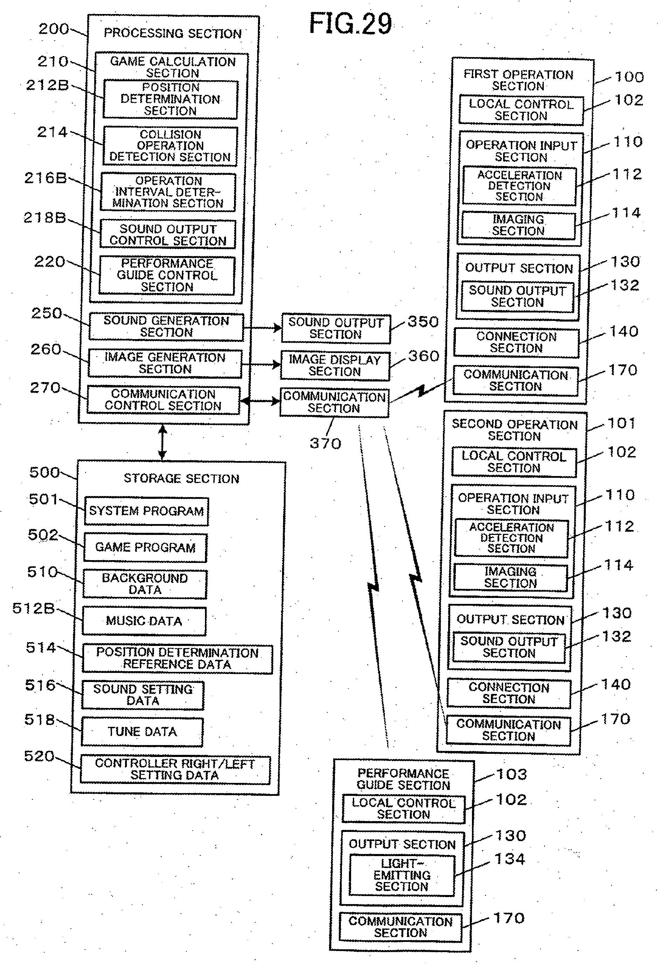

FIG. 29 is a functional block diagram showing a functional configuration example according to this embodiment.

As shown in FIG. 29, a performance guide section 103 that corresponds to the performance guide section 1100 is provided in this embodiment in addition to the functional blocks according to the first embodiment, and an imaging section 114 is provided in the operation input section 110 of each of the first operation section 100 and the second operation section 101. The imaging section 114 corresponds to the imaging element 1248 shown in FIG. 2A.

The game calculation section 210 includes a performance guide control section 220 that controls music display and the ON/OFF state of the light-emitting section 1130 referring to music data 512B.

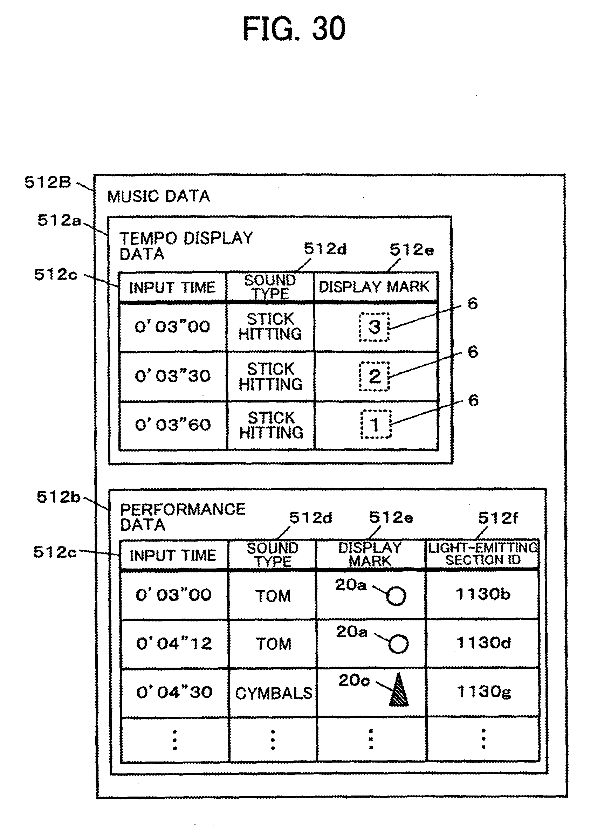

As shown in FIG. 30, a light-emitting section ID 512f that indicates the light-emitting section 1130 that is turned ON corresponding to each display mark 512e is stored as the music data 512B, for example. The example of the light-emitting section ID 512f in FIG. 30 is indicated by the symbol of the light-emitting section 1130 shown in FIG. 25A.

A position determination section 212B according to this embodiment determines the position of each of the first operation section 100 and the second operation section 101 using the acceleration information detected by the acceleration detection section 112 (refer to the first embodiment) and image information taken by the imaging section 114 as described with reference to FIGS. 26 to 28.

In this embodiment, an operation interval determination section 216B measures the time interval between operation inputs when the player has successively performed the same type of operation inputs (i.e., the second inexperienced player assistance function). The operation interval determination section 216B determines the measured time interval in multiple levels based on a given standard. Specifically, the operation interval determination section 216B determines the input speed of successive input of the same type of beating operations in multiple levels.

In this embodiment, a sound output control section 218B has the same function as that of the sound output section 218 according to the first embodiment, and adjusts the output interval of the sound data 516c within a range determined by multiplying the time interval determined by the operation interval determination section 216B by a given factor (e.g., 1.2 to 3) corresponding to the interval determined by the operation interval determination section and the level of the time interval. Specifically, when the player successively performs beating operations at a high speed, the sound output control section 218B reduces the output interval of the sound of the sound data 516c (i.e., the sound data 516c is reproduced a number of times larger than the number of actual beating operations) so that the player can successively perform beating operations at a high speed as compared with his skill. If the factor is increased as the operation interval decreases, the player can realize that he has become skilled and can perform beating operations at a higher speed.

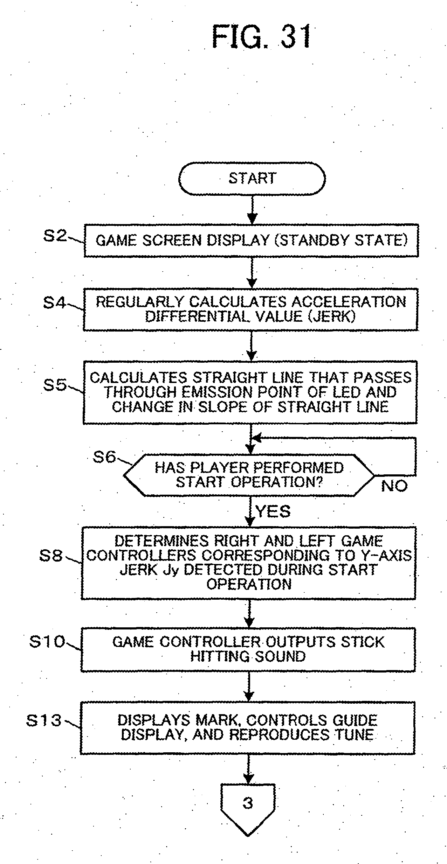

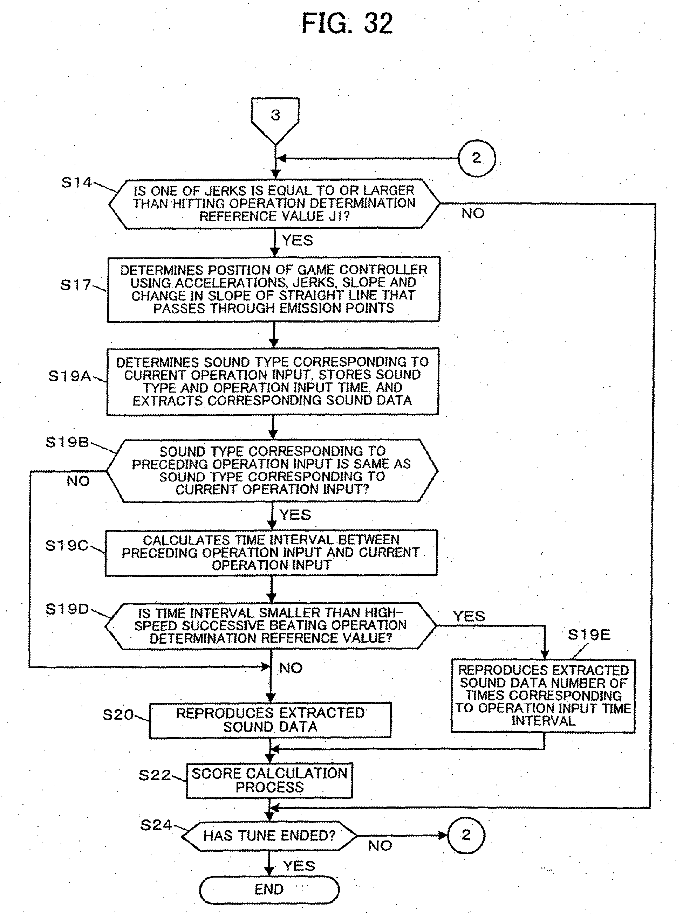

FIGS. 31 and 32 are flowcharts illustrative of the flow of a process according to this embodiment. As shown in FIGS. 31 and 32, the flow of the process according to this embodiment is basically the same as that of the first embodiment. The difference from the first embodiment is as follows.

After the step S4, the processing section 200 calculates the position of the emission point 71 of the LED 1132 in the image coordinate system in the image taken by the imaging element 1248 in a given cycle (e.g., 1/240th of a second), and calculates the slope and a change in slope of the straight line 72 (step S5). The processing section 200 then regularly calculates the slope and a change in slope of the straight line 72 in the same manner as the acceleration differential value (jerk).

For example, the processing section 200 calculates the positions of three emission points 71 in the image coordinate system, and calculates the distance between the emission points 71. Since the combination of the emission points positioned at the shortest distance corresponds to the emission points 71a and 71b, the processing section 200 calculates the vector from the emission point 71c to the emission point 71 a, and temporarily stores the vector in the storage section 500. The processing section 200 calculates a change in slope of the straight line 72 from the preceding vector that has been stored and the current vector that has been calculated.

When the number of LEDs 1132 on each end of the light-emitting section 1130 is identical, the emission point 71 on the left end may be considered to be the end of the straight line 72, and the vector from the right end to the left end may be calculated provided that the game controller 1230 is not held in a front side downward (i.e., inverted) state when used in the first and second embodiments. Alternatively, when the number of LEDs 1132 on each end of the light-emitting section 1130 is identical, the straight line 72 that passes through the emission points 71 is calculated, and an angle formed by the straight line 72 and the Xw axis in the image coordinate system is calculated and temporarily stored in the storage section 500. The processing section 200 may calculate a change in slope of the straight line 72 from the preceding angle that has been stored and the current angle that has been calculated.

The processing section 200 performs a guide display control process instead of the step S 12 according to the first embodiment, and causes the light-emitting section 1130 of the performance guide section 1100 corresponding to the mark 6 that reaches the input timing indicator 12 to be turned ON at a timing at which the mark 6 reaches the input timing indicator 12 in the music display section 10 (step S 13).

Instead of the step S12 according to the first embodiment, the processing section 200 determines the position of the game controller 1230 using the accelerations detected by the acceleration sensor 1246, the jerks calculated in the step S4, the slope and a change in slope of the straight line 72 that passes through the emission points 71 calculated in the step S5, and the like (step S17).

The position of the game controller 1230 can be determined more reliably by further utilizing the position information of the emission point 71 calculated from the image taken by the imaging element 1248, even if the accelerations are not accurately detected by the acceleration sensor 1348, or the accuracy of position determination using the acceleration information tends to decrease due to noise (e.g., a low SN ratio). When utilizing the image and the accelerations for position determination, a first position determination process may be performed by utilizing the accelerations, and a second position determination process utilizing the image may be performed when it is difficult to determine the position of the game controller 1230 by the first position determination process. Note that the first position determination process and the second position determination process may be performed in reverse order, or only the position determination process utilizing the image may be performed.

Instead of the step S 18 according to the first embodiment, the processing section 200 records the sound type determination result and the time when the operation input has been performed (e.g., the elapsed time from the start of the performance) in the storage section 500 as historical information, and extracts the corresponding sound data (step S19A).

When the sound type corresponding to the preceding operation input is the same as the sound type corresponding to the current operation input (YES in step S19B), the processing section 200 calculates the time interval between the preceding operation input and the current operation input (step S19C). When the calculated time interval is smaller than a high-speed successive beating operation determination reference value (YES in step S 19D), the processing section 200 reproduces the extracted sound data a number of times corresponding to the calculated time interval (step S 19E). For example, the time interval is divided in multiple levels, and the number of reproductions is increased as the level of the time interval decreases. Specifically, sound corresponding to a plurality of operation inputs is reproduced even though the player has performed one operation input.

According to this embodiment, the position determination accuracy can be further improved by utilizing the image taken by the imaging element 1248 provided in the game controller 1230 while achieving the same effects as those of the first embodiment. Moreover, the inexperienced player assistance functions can also be implemented. Specifically, the light-emitting section 1130 of the performance guide section 1100 can indicate the type and the timing of the operation input to the player. Since the indication of the positions of the game controller cases 1000R and 1000L is included in the guide mark 1120 corresponding to each light-emitting section 1130, the operation experience of the player can be assisted more effectively.

Note that the performance guide section 1100 may be configured so that the light-emitting section 1130 and the control section 1102 that controls the light-emitting section 1130 are omitted. The arrangement and the number of guide marks 1120 of the operation guide 1100 may be appropriately set corresponding to the type of musical instrument.

### Modification

The first and second embodiments to which the invention is applied have been described above. Note that the invention is not limited thereto. The elements may be appropriately added, omitted, or changed without departing from the spirit and scope of the invention.

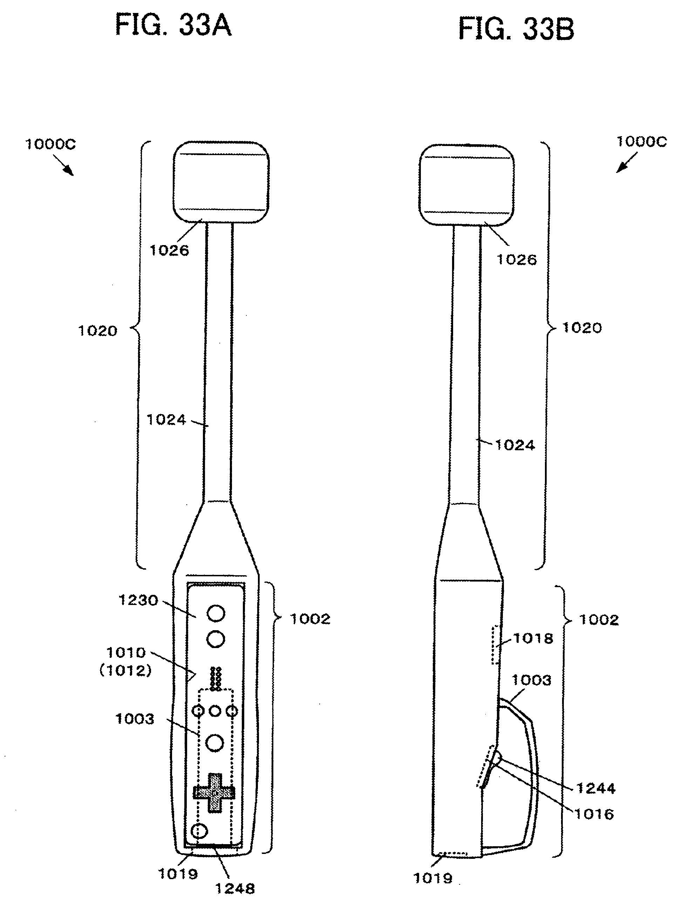

For example, the appearance of the game controller case 1000 may be appropriately changed corresponding to the type of percussion instrument that is virtually played in the game. For example, the appearance of the game controller case 1000 may be appropriately set corresponding to the percussion instrument used in the game, such as increasing the length of the contact section 1020 to implement a design that imitates a mallet when the player virtually plays a timpani set or a xylophone in the game (see game controller case 1000C shown in FIG. 33).

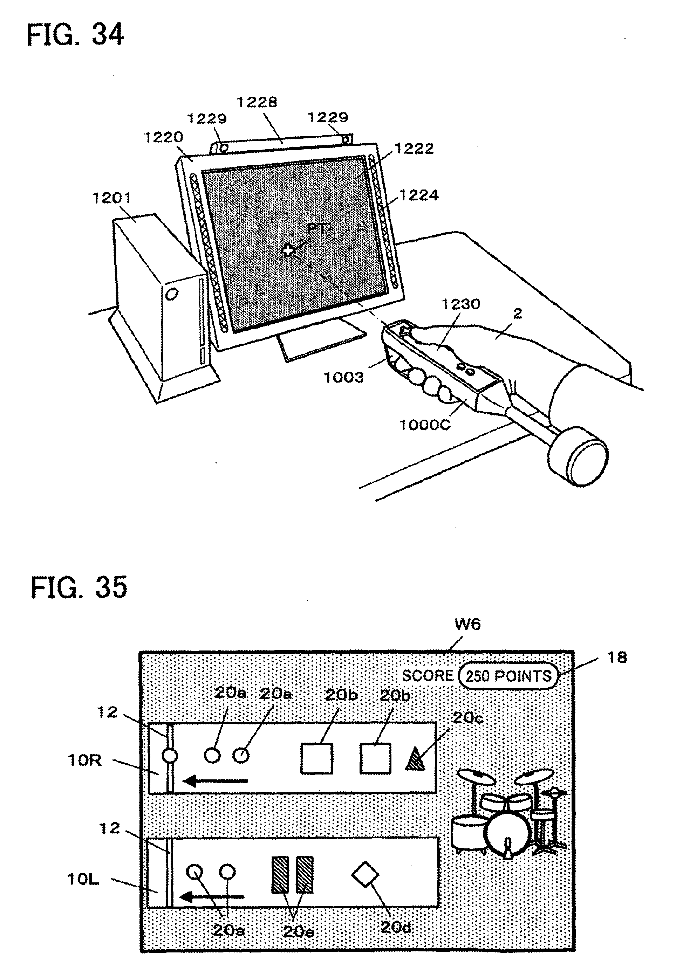

The game controller 1230 is placed in the game controller cases 1000 and 1000B according to the above embodiments so that the direction of the end of the game controller 1230 coincides with the direction of the end of the game controller case. Note that the game controller 1230 may be placed in the game controller case so that the direction of the end of the game controller 1230 does not coincide with the direction of the end of the game controller case. In this case, if the imaging range of the imaging element 1248 is not covered by the connection terminal window 1019 (see game controller case 1000C shown in FIG. 33), it is possible to utilize a function of displaying a pointer PT on the screen by utilizing the image taken by the imaging section 1248 by holding the game controller case 1000C while directing the rear end of the game controller case 1000C in the forward direction, and imaging the light-emitting section 1228 placed near the video monitor 1220 using the imaging element 1248 (see FIG. 34). It is possible to image the light-emitting section 1228 and display the pointer PT by appropriately utilizing known technology.

The external shape of the grip section 1002 may also be appropriately changed. For example, a finger insertion section 1003 into which some or all of the fingers other than the thumb are inserted may be provided, as shown in FIG. 33. In this case, a situation in which the player drops the game controller case when swinging the game controller case can be prevented. Note that the finger insertion section 1003 may be omitted in FIG. 33.

In the above embodiments, the music display section 10 is configured as one strip-shaped area. Note that the music display section 10 may be divided into a right music display section 10R and a left music display section 10L, as shown in FIG. 35, for example. In this case, it is necessary to additionally provide setting information that indicates that the music data 512 is displayed in the right music display section 10R or the left music display section 10L. A smoother performance can be implemented by dividing the music display section 10 into the right music display section 10R and the left music display section 10L.

In the first embodiment, a beating operation performed using the game controller case 1000R held with the right hand and a beating operation performed using the game controller case 1000L held with the left hand are separately determined, and sound corresponding to each beating operation is output during an operation other than the start operation. Note that sound corresponding to the combination of a beating operation performed using the game controller case 1000R held with the right hand and a beating operation performed using the game controller case 1000L held with the left hand may be output.

For example, the sound of a triangle may be output when the player has performed a beating operation when the game controller case 1000R held with the right hand is in a "front end downward/front side rightward" state and performed a beating operation when the game controller case 1000L held with the left hand is in a "front end downward/front side leftward" state.

The performance guide section 1100 is used in the second embodiment. Note that the performance guide section 1100 may be omitted when the light-emitting section 1228 is disposed near the video monitor 1220 and the player plays the game play in a state in which the light-emitting section 1228 can be imaged by the imaging element 1248 when performing a hitting operation.

Although only some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention.

## Claims

1. A game controller case (1000) comprising:
a holding section (1010) that removably holds a game controller that includes an acceleration detection section and a communication section that transmits an acceleration detected by the acceleration detection section to a game device;
a contact section (1020) comprising an elastic layer (1024) for directly colliding against a beating target; and
a transfer section (1022) that is disposed inside the contact section (1020) under the elastic layer (1024), and is formed from a hard material, the transfer section (1022) transferring an impact that has occurred when a player has performed a beating operation on an article with the contact section to the holding section (1010).

2. The game controller case as defined in claim 1,
the transfer section (1022) including a rod-shaped section, and a head (1026) that is provided on an end of the rod-shaped section, at least an outer layer of the head (1026) being formed of a shock-absorbing member.

3. The game controller case as defined in claim 1 or 2,
the entire game controller case (1000) being formed in a shape of a stick that is used to play a percussion instrument.

4. The game controller case as defined in any one of claims 1 to 3,
the holding section (1010) having an operation window (1016) that exposes an operation button (1244) provided in the game controller (1230) when the holding section (1010) holds the game controller (1230).

5. The game controller case as defined in any one of claims 1 to 4, further comprising:
a finger insertion section (1003), some or all of fingers of the player other than a thumb being inserted into the finger insertion section (1003) when the player holds the holding section (1010).

6. A game controller case set comprising a pair of the game controller cases as defined in any one of claims 1 to 5.

7. A sound output control system comprising:
a game device (1201);
a game controller (1230) that includes an acceleration detection section (1246) and transmits an acceleration detected by the acceleration detection section (1246) to the game device (1201);
a speaker (1252) that outputs sound based on a sound output signal input from the game device (1201); and
the game controller case (1000) as defined in any one of claims 1 to 5 that holds the game controller (1230),
the game device (1201) including:
a reception section that receives the acceleration detected by the game controller (1230) using the acceleration detection section (1246);
a position determination section that determines a position of the game controller when a player has performed a beating operation using the acceleration received by the reception section; and
a sound output control section that changes the sound output from the speaker (1252) corresponding to the position determined by the position determination section.

8. The sound output control system as defined in claim 7,
the game controller (1230) including an imaging section (1248);
the reception section receiving an image taken by the imaging section (1248) of the game controller (1230); and
the position determination section determining the position of the game controller (1230) during the beating operation using the image received by the reception section.

9. The sound output control system as defined in claim 7 or 8, comprising:
a pair of the game controllers respectively placed in the game controller cases;
the reception section receiving the acceleration from each of the pair of game controllers;
the position determination section determining the position of each of the pair of game controllers during the beating operation; and
the sound output control section changing the sound corresponding to the position of each of the pair of game controllers during the beating operation.

10. The sound output control system as defined in claim 9,
the sound output control section changing the sound based on a combination of the positions of the pair of game controllers during the beating operation.

11. The sound output control system as defined in claim 9 or 10, further comprising:
a detection section that detects whether or not the player has performed an operation that causes the pair of game controllers to collide based on the acceleration of each of the pair of game controllers and a reception timing of acceleration information,
the sound output control section causing the speaker (1252) to output a given stick hitting sound corresponding to the detection by the detection section.

12. The sound output control system as defined in claim 11,
the game controller (1230) including a sound output section; and
the game device further including a hitting sound output control section that causes the sound output section of each of the pair of game controllers to output the stick hitting sound.

13. The sound output control system as defined in any one of claims 7 to 12,
the game device further including an operation interval determination section that determines a beating operation interval using a reception timing of the acceleration; and
the sound output control section adjusting an output interval of a given intermittent sound based on the interval determined by the operation interval determination section.

## Patentansprüche

1. Spielsteuergerät-Gehäuse (1000), das Folgendes umfasst:
eine Haltesektion (1010), die entnehmbar ein Spielsteuergerät enthält, das eine Beschleunigungserkennungssektion und eine Kommunikationssektion, die eine durch die Beschleunigungserkennungssektion erkannte Beschleunigung an ein Spielgerät übermittelt, einschließt,
eine Kontaktsektion (1020), die eine elastische Lage (1024) für das unmittelbare Anstoßen an ein Schlagziel umfasst, und
eine Übertragungssektion (1022), die innerhalb der Kontaktsektion (1020) unter der elastischen Lage (1024) angeordnet ist und aus einem harten Werkstoff geformt ist, wobei die Übertragungssektion (1022) einen Stoß, der aufgetreten ist, wenn ein Spieler mit der Kontaktsektion eine Schlagoperation auf einen Artikel ausgeführt hat, auf die Haltesektion (1010) überträgt.

2. Spielsteuergerät-Gehäuse nach Anspruch 1,
wobei die Übertragungssektion (1022) eine stabförmige Sektion und einen Kopf (1026), der an einem Ende der stabförmigen Sektion bereitgestellt wird, einschließt, wobei wenigstens eine äußere Lage des Kopfes (1026) aus einem stoßdämpfenden Element geformt ist.

3. Spielsteuergerät-Gehäuse nach Anspruch 1 oder 2,
wobei das gesamte Spielsteuergerät-Gehäuse (1000) in einer Gestalt eines Stocks geformt ist, der dafür verwendet wird, ein Perkussionsinstrument zu spielen.

4. Spielsteuergerät-Gehäuse nach einem der Ansprüche 1 bis 3,
wobei die Haltesektion (1010) ein Bedienungsfenster (1016) hat, das einen in dem Spielsteuergerät (1230) bereitgestellten Bedienungsknopf (1244) freilegt, wenn die Haltesektion (1010) das Spielsteuergerät (1230) enthält.

5. Spielsteuergerät-Gehäuse nach einem der Ansprüche 1 bis 4, das ferner Folgendes umfasst:
eine Fingereinstecksektion (1003), wobei einige oder alle Finger des Spielers außer dem Daumen in die Fingereinstecksektion (1003) eingesteckt werden, wenn der Spieler die Haltesektion (1010) hält.

6. Spielsteuergerät-Gehäusesatz, der ein Paar der Spielsteuergerät-Gehäuse nach einem der Ansprüche 1 bis 5 umfasst.

7. Klangausgabe-Steuerungssystem, das Folgendes umfasst:
ein Spielgerät (1201),
ein Spielsteuergerät (1230), das eine Beschleunigungserkennungssektion (1246) einschließt und eine durch die Beschleunigungserkennungssektion (1246) erkannte Beschleunigung an das Spielgerät (1201) übermittelt,
einen Lautsprecher (1252), der auf der Grundlage eines Klangausgabesignals, das von dem Spielgerät (1201) eingegeben wird, einen Klang ausgibt, und
das Spielsteuergerät-Gehäuse (1000) nach einem der Ansprüche 1 bis 5, welches das Spielsteuergerät (1230) enthält,
wobei das Spielgerät (1201) Folgendes einschließt:
eine Empfangssektion, welche die durch das Spielsteuergerät (1230) unter Verwendung der Beschleunigungserkennungssektion (1246) erkannte Beschleunigung empfängt,
eine Positionsbestimmungssektion, welche eine Position des Spielsteuergeräts bestimmt, wenn ein Spieler unter Verwendung der durch die Empfangssektion empfangenen Beschleunigung eine Schlagoperation ausgeführt hat, und
eine Klangausgabe-Steuerungssektion, welche die Klangausgabe aus dem Lautsprecher (1252) entsprechend der durch die Positionsbestimmungssektion bestimmten Position verändert.

8. Klangausgabe-Steuerungssystem nach Anspruch 7,
wobei das Spielsteuergerät (1230) eine Bildgebungssektion (1248) einschließt, wobei die Empfangssektion ein durch die Bildgebungssektion (1248) des Spielsteuergeräts (1230) aufgenommenes Bild empfängt und
wobei die Positionsbestimmungssektion die Position des Spielsteuergeräts (1230) während der Schlagoperation unter Verwendung des durch die Empfangssektion empfangenen Bildes bestimmt.

9. Klangausgabe-Steuerungssystem nach Anspruch 7 oder 8, das Folgendes umfasst:
ein Paar der Spielsteuergeräte, die jeweils in den Spielsteuergerät-Gehäusen angeordnet sind,
wobei die Empfangssektion die Beschleunigung von jedem des Paars von Spielsteuergeräten empfängt,
wobei die Positionsbestimmungssektion die Position jedes des Paars von Spielsteuergeräten während der Schlagoperation bestimmt und
wobei die Klangausgabe-Steuerungssektion den Klang entsprechend der Position jedes des Paars von Spielsteuergeräten während der Schlagoperation verändert.

10. Klangausgabe-Steuerungssystem nach Anspruch 9,
wobei die Klangausgabe-Steuerungssektion den Klang auf der Grundlage einer Kombination der Positionen des Paars von Spielsteuergeräten während der Schlagoperation verändert.

11. Klangausgabe-Steuerungssystem nach Anspruch 9 oder 10, das ferner Folgendes umfasst:
eine Erkennungssektion, die aus der Grundlage der Beschleunigung jedes des Paars von Spielsteuergeräten und einer Empfangszeitsteuerung der Beschleunigungsinformationen erkennt, ob der Spieler eine Operation, die bewirkt, dass das Paar von Spielsteuergeräten anstößt, ausgeführt hat oder nicht,
wobei die Klangausgabe-Steuerungssektion bewirkt, dass der Lautsprecher (152) einen gegebenen Stockschlagklang, welcher der Erkennung durch die Erkennungssektion entspricht, ausgibt.

12. Klangausgabe-Steuerungssystem nach Anspruch 11,
wobei das Spielsteuergerät (1230) eine Klangausgabesektion einschließt und
wobei das Spielgerät ferner eine Schlagklangausgabesektion einschließt, die bewirkt, dass die Klangausgabesektion jedes des Paars von Spielsteuergeräten den Stockschlagklang ausgibt.

13. Klangausgabe-Steuerungssystem nach einem der Ansprüche 7 bis 12,
wobei das Spielgerät ferner eine Operationsintervall-Bestimmungssektion einschließt, die unter Verwendung einer Empfangszeitsteuerung der Beschleunigung ein Schlagoperationsintervall bestimmt, und
wobei die Klangausgabe-Steuerungssektion auf der Grundlage des durch die Operationsintervall-Bestimmungssektion bestimmten Intervalls ein Ausgabeintervall eines gegebenen in Abständen auftretenden Klangs einstellt.

## Revendications

1. Boîtier de contrôleur de jeu (1000) comportant :
une section de maintien (1010) qui maintient de manière amovible un contrôleur de jeu qui comprend une section de détection d'accélération et une section de communication qui transmet une accélération détectée par la section de détection d'accélération à un dispositif de jeu ;
une section de contact (1020) comportant une couche élastique (1024) pour heurter directement une cible de battement ; et
une section de transfert (1022) qui est disposée à l'intérieur de la section de contact (1020) sous la couche élastique (1024), et est réalisée dans un matériau dur, la section de transfert (1022) transférant un impact qui s'est produit lorsqu'un joueur a exécuté une opération de battement sur un article avec la section de contact à la section de maintien (1010).

2. Boîtier de contrôleur de jeu selon la revendication 1,
la section de transfert (1022) comprenant une section en forme de tige, et une tête (1026) qui est fournie sur une extrémité de la section en forme de tige, au moins une couche externe de la tête (1026) étant formée d'un élément absorbant les chocs.

3. Boîtier de contrôleur de jeu selon la revendication 1 ou 2,
le boîtier de contrôleur de jeu entier (1000) étant réalisé en forme de baguette qui est utilisée pour jouer sur un instrument de percussion.

4. Boîtier de contrôleur de jeu selon l'une quelconque des revendications 1 à 3,
la section de maintien (1010) étant munie d'une fenêtre d'opération (1016) qui expose un bouton d'opération (1244) fourni dans le contrôleur de jeu (1230) lorsque la section de maintien (1010) maintient le contrôleur de jeu (1230).

5. Boîtier de contrôleur de jeu selon l'une quelconque des revendications 1 à 4, comportant en outre :
une section d'insertion des doigts (1003), certains des doigts ou tous les doigts du joueur autre qu'un pouce étant insérés dans la section d'insertion des doigts (1003) lorsque le joueur tient la section de maintien (1010).

6. Ensemble de boîtiers de contrôleurs de jeu comportant une paire de boîtiers de contrôleurs de jeu selon l'une quelconque des revendications 1 à 5.

7. Système de commande de sortie sonore comportant :
un dispositif de jeu (1201) ;
un contrôleur de jeu (1230) qui comprend une section de détection d'accélération (1246) et transmet une accélération détectée par la section de détection d'accélération (1246) au dispositif de jeu (1201);
un haut-parleur (1252) qui sort un son basé sur une entrée du signal de sortie sonore depuis le dispositif de jeu (1201) ; et
le boîtier de contrôleur de jeu (1000) selon l'une quelconque des revendications 1 à 5 qui maintient le contrôleur de jeu (1230),
le dispositif de jeu (1201) comprenant :
une section de réception qui reçoit l'accélération détectée par le contrôleur de jeu (1230) en utilisant la section de détection d'accélération (1246) ;
une section de détermination de position qui détermine une position du contrôleur de jeu lorsqu'un joueur a exécuté une opération de battement utilisant l'accélération reçue par la section de réception ; et
une section de commande de sortie sonore qui change la sortie sonore du haut-parleur (1252) correspondant à la position déterminée par la section de détermination de position.

8. Système de commande de sortie sonore selon la revendication 7,
le contrôleur de jeu (1130) comprenant une section d'imagerie (1248) ;
la section de réception recevant une image prise par la section d'imagerie (1248) du contrôleur de jeu (1230) ; et
la section de détermination de position déterminant la position du contrôleur de jeu (1230) durant l'opération de battement en utilisant l'image reçue par la section de réception.

9. Système de commande de sortie sonore selon la revendication 7 ou 8, comportant :
une paire de contrôleurs de jeu placés respectivement dans les boîtiers de contrôleurs de jeu ;
la section de réception recevant l'accélération provenant de chacun des contrôleurs de jeu de ladite paire de contrôleurs de jeu ;
la section de détermination de position déterminant la position de chacun des contrôleurs de jeu de ladite paire de contrôleurs de jeu durant l'opération de battement ; et
la section de commande de sortie sonore changeant le son correspondant à la position de chacun des contrôleurs de jeu de ladite paire de contrôleurs de jeu durant l'opération de battement.

10. Système de commande de sortie sonore selon la revendication 9,
la section de commande de sortie sonore changeant le son sur la base d'une combinaison de positions de la paire de contrôleurs de jeu durant l'opération de battement.

11. Système de commande de sortie sonore selon la revendication 9 ou 10, comportant en outre :
une section de détection qui détecte si le joueur a exécuté ou non une opération qui entraîne un heurt de la paire de contrôleurs de jeu sur la base de l'accélération de chacun des contrôleurs de jeu de ladite paire de contrôleurs de jeu et une temporisation de réception des informations d'accélération,
section de commande de sortie sonore entraînant la sortie par le haut-parleur (1252) d'un son de frappe de baguette donné correspondant à la détection par la section de détection.

12. Système de commande de sortie sonore selon la revendication 11,
le contrôleur de jeu (1230) comprenant une section de sortie sonore ; et
le dispositif de jeu comprenant en outre une section de commande de sortie sonore de frappe qui entraîne la sortie du son de frappe d'une baguette par la section de sortie sonore de chacun des contrôleurs de jeu de ladite paire de contrôleurs de jeu.

13. Système de commande de sortie sonore selon l'une quelconque des revendications 7 à 12,
le dispositif de jeu comprenant en outre une section de détermination d'un intervalle d'opération qui détermine un intervalle d'opération de battement en utilisant une temporisation de réception de l'accélération ; et
la section de commande de sortie sonore réglant un intervalle de sortie d'un son intermittent donné sur la base de l'intervalle déterminé par la section de détermination d'intervalle d'opération.
